Europäisches Patentamt

European Patent Office

Office européen des brevets

(19)

(11) Publication number: **0 147 073**
**B1**

(12) # EUROPEAN PATENT SPECIFICATION

(45) Date of publication of patent specification: **29.03.89**

(51) Int. Cl.⁴: **H 04 N 5/21**

(21) Application number: **84308247.0**

(22) Date of filing: **28.11.84**

(54) Noise reduction circuit for a video signal.

(30) Priority: **28.11.83 JP 223753/83**
**05.12.83 JP 229348/83**

(43) Date of publication of application:
**03.07.85 Bulletin 85/27**

(45) Publication of the grant of the patent:
**29.03.89 Bulletin 89/13**

(84) Designated Contracting States:
**DE FR GB**

(56) References cited:
**FR-A-2 437 130**
**US-A-4 249 210**

**THE BKSTS JOURNAL, vol. 60, no. 10, October 1978, pages 286, 287, 302, London, GB; J. O. DREWERY et al.: "An adaptive noise reducer for PAL and NTSC signals"**

(73) Proprietor: **VICTOR COMPANY OF JAPAN, LIMITED**
**12, 3-chome, Moriya-Cho Kanagawa-ku Yokohama-Shi Kanagawa-Ken 221 (JP)**

(72) Inventor: **Fukuda, Hisatoshi**
**Shimoseya-Danchi 4-4 3-57-1, Shimoseya Seya-Ku**
**Yokohama-Shi Kanagawa-Ken (JP)**
Inventor: **Fujita, Mitsuo**
**7-14-5, Konandai Konan-Ku Yokohama-Shi Kanagawa-Ken (JP)**

(74) Representative: **Robinson, John Stuart et al**
**MARKS & CLERK 57/60 Lincoln's Inn Fields London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention generally relates to noise reduction circuits for video signals, and more particularly to a noise reduction circuit which comprises a filter circuit within a feedback loop of a feedback type comb filter and effectively reduces noise within an input video signal so as to improve the picture quality, by varying the feedback ratio responsive to the frequency.

Conventionally, a noise reduction circuit is provided in a luminance signal reproducing system of a helical scan type magnetic recording and/or reproducing apparatus (video tape recorder or VTR), for example, so as to reduce noise within a reproduced luminance signal after a frequency demodulation. For example, in a first conventional noise reduction circuit [see Introduction to Home VTR, October 1981 pp 162-3 (Corona Publishing Company Limited)], the reproduced luminance signal which is reproduced from a magnetic tape and is demodulated in a frequency demodulator, is applied to an input terminal and is passed through a highpass filter so as to obtain only a frequency component of over 1 MHz, for example. An output signal of the highpass filter is passed through a limiter and a coefficient multiplier, and is supplied to a subtracting circuit. The subtracting circuit subtracts the output signal of the coefficient multiplier from the video signal (reproduced luminance signal, for example) applied to the input terminal. The noise which is visually conspicuous to the human eye, is generally concentrated in a low-level part of the high-frequency component. Hence, a video signal in which the visually conspicuous noise is eliminated, is produced from the subtracting circuit and is obtained through an output terminal.

On the other hand, in a second conventional noise reduction circuit (see National Technical Report, vol. 28, no. 3, June 1982 pp 567-8, Hashimoto et al, "Signal Processing in VTR and Control I.C."), the video signal (reproduced luminance signal, for example) which is applied to an input terminal, is supplied to IH delay circuit wherein the video signal is delayed by a delay time of 1H, where $H$ represents one horizontal scanning period. An output delayed video signal is supplied to a first subtracting circuit. The first subtracting circuit subtracts the output delayed video signal of the 1H delay circuit from the video signal applied to the input terminal. In the video signal, information contents which are separated by an interval of 1H are extremely similar to each other, and the so-called vertical correlation (line correlation) exists, as is well known. However, the vertical correlation does not exist for the noise. As a result, a signal made up of the noise and a video signal component having no vertical correlation, is obtained from the first subtracting circuit. The output signal of the first subtracting circuit is subjected to an amplitude limitation in a limiter which has a limiting level in the range of a peak-to-peak value of the noise. An output signal of the emitter is supplied to a second subtracting circuit which subtracts the output signal of the limiter from the video signal applied to the input terminal. Consequently, a video signal in which the noise is greatly reduced, is produced from the second subtracting circuit and is obtained through an output terminal.

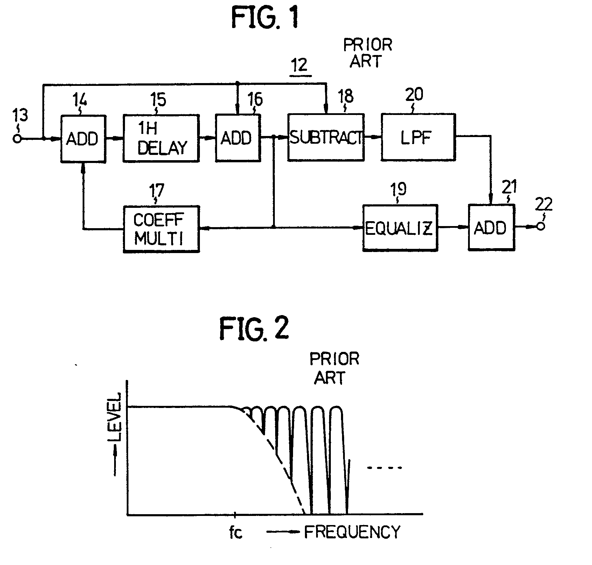

Further, there is a third conventional noise reduction circuit (see Fig. 1), a video signal (reproduced luminance signal, for example) is applied to an input terminal, and is supplied to the feedback type comb filter which eliminates the noise and obtains a video signal component having the vertical correlation. An output signal of the feedback type comb filter is supplied to a subtracting circuit which subtracts the output signal of the feedback type comb filter from the video signal applied to the input terminal, so as to obtain a signal made up of the noise included within the video signal and a video signal component having no vertical correlation. The output signal of the subtracting circuit is passed through a lowpass filter which obtains only a low-frequency component of the output signal of the subtracting circuit. The output signal of the feedback type comb filter has a predetermined characteristic after being passed through an equalizer circuit. The output signal of the lowpass filter and an output signal of the equalizer circuit are added in an adding circuit. As a result, a signal in which the noise is eliminated, is produced from the adding circuit and is obtained through an output terminal.

The frequency characteristic of the third conventional noise reduction circuit is flat in a frequency band under a cutoff frequency $f_c$ of the lowpass filter, but has a comb filter characteristic in a frequency band over the cutoff frequency $f_c$ so as to pass frequency components which are natural number multiples of a horizontal scanning frequency $f_H$. Thus, according to the third conventional noise reduction circuit, it is possible to eliminate the noise in the high-frequency band over the cutoff frequency $f_c$. Further, it is possible to prevent deterioration in the vertical resolution which is visually conspicuous in the low-frequency band under the cutoff frequency $f_c$.

However, in a case where the video signal applied to the input terminal has an edge of a large amplitude, a high-frequency component of the edge is obtained from the highpass filter in the first conventional noise reduction circuit described before. Thus, in the first conventional noise reduction circuit, the video signal and the noise in the vicinity of the edge are eliminated by the amplitude limitation performed in a limiter. As a result, there is a problem in that a video signal in which the edge noise still remains in the vicinity of the edge where the amplitude limitation is performed in the limiter, is produced from the subtracting circuit and is obtained through the output terminal.

Especially during a long-time mode of a VTR for home use, in which the recording and reproduction are carried out with respect to a given length of magnetic tape for a time which is longer than the recording and reproducing times during a normal mode by making the track width extremely narrow, the signal-to-noise (S/N) ratio of the reproduced video signal is poor because the track width is narrow and the relative linear speed between the magnetic tape and a head is slow. In addition, the crosstalk from adjacent tracks is large, and the edge noise is visually conspicuous in the reproduced picture. For this reason, the S/N ratio cannot be improved sufficiently according to the first conventional noise reduction circuit.

Further, in the VTR for home use, the noise is also distributed in the low-frequency band under 1 MHz. Since the first conventional noise reduction circuit is only effective with respect to the noise over the cutoff frequency of the highpass filter, it is also impossible to obtain the noise reducing effect with respect to the noise in the low-frequency band at parts other than the edge of the video signal.

In a case where the video signal applied to the input terminal has the vertical correlation, the second conventional noise reduction circuit is superior compared to the first conventional noise reduction circuit in that the second conventional noise reduction circuit can eliminate the edge noise and improve the S/N ratio. However, although the S/N ratio can be improved theoretically by 3 dB, the S/N ratio can only be improved by approximately 1.5 dB to 2.0 dB in actual practice. Moreover, the second conventional noise reduction circuit has a comb filter characteristic which passes frequencies which are natural number multiples of the horizontal scanning frequency $f_H$ to the same extent throughout the entire frequency band. As a result, the vertical resolution becomes deteriorated, and there is a problem in that the deterioration in the vertical resolution is visually conspicuous especially in the low-frequency band.

On the other hand, the third conventional noise reduction circuit is advantageous in that it is possible to reduce the edge noise described before. However, there is a problem in that the low-frequency noise (in the range of 1 MHz) which are visually conspicuous especially in the reproduced picture obtained in the VTR, cannot be reduced in the low-frequency band under the cutoff frequency $f_c$ of the lowpass filter. In this case, it is possible to reduce the low-frequency noise by lowering the cutoff frequency $f_c$ of the lowpass filter to a frequency in the range of 1 MHz, however, a coefficient of a coefficient multiplier within the feedback type comb filter must be set to a large value in order to obtain a desired S/N ratio improvement factor which is greater than the S/N ratio improvement factor obtainable in the second conventional noise reduction circuit. For this reason, the comb filter characteristic becomes sharp, and the vertical resolution is greatly deteriorated in the frequency band over the cutoff frequency $f_c$ of the lowpass filter. The deterioration in the vertical resolution is visually conspicuous in a frequency of 1 MHz to 2 MHz.

Hence, the cutoff frequency $f_c$ of the lowpass filter must inevitably be set to a frequency in the range of 2 MHz to 3 MHz, and it is virtually impossible to improve the S/N ratio in the low-frequency band by the desired improvement factor so as to reduce the low-frequency noise which are visually conspicuous especially in the reproduced picture obtained in the VTR.

Accordingly, it is a general object of the present invention to provide a novel and useful noise reduction circuit for a video signal, in which the problems described heretofore are eliminated.

According to first and second aspects of the invention, there are provided noise reduction circuits as defined in the appended Claims 1 to 4, respectively. Preferred embodiments of the invention are defined in the other appended claims.

It is thus possible to provide a noise reduction circuit for a video signal, which comprises a highpass filter or a bandpass filter within a feedback loop of a feedback type comb filter, and passes an output signal of the feedback type comb filter through an equalizer circuit having a predetermined characteristic, so that an output video signal of the equalizer circuit is obtained through an output terminal. It is possible to reduce the low frequency noise which is visually conspicuous especially in the reproduced picture obtained in the VTR and improve the S/N ratio to such an extent that the vertical resolution is hardly deteriorated. Moreover, it is possible to greatly improve the S/N ratio in the high-frequency band, that is, by approximately 6 dB to 10 dB.

It is also possible to provide a noise reduction circuit for a video signal, in which the output video signal of the equalizer circuit is supplied to an adding circuit through a subtracting circuit and a clipping circuit, and is also supplied directly to the adding circuit. It is possible to obtain a variable frequency characteristic which is in accordance with the rate of the vertical correlation in the video signal. With respect to a video signal having a strong vertical correlation, it is possible to obtain from the adding circuit a video signal in which the noise is greatly reduced by the comb filter characteristic. On the other hand, with respect to a video signal having little vertical correlation, the filter characteristic is changed so as to pass the entire frequency band, and it is possible to obtain from the adding circuit a video signal having no deterioration in the vertical resolution.

It is further possible to provide a noise reduction circuit for a video signal, in which the output video signal of the equalizer circuit is supplied to a filter circuit which separates the video signal into a signal in a high-frequency band and a signal in a low-frequency band. The output signal of the filter circuit in the high-frequency band, is passed through a clipping circuit and is added with the output signal of the filter circuit in the low-frequency band. A signal which is obtained by this addition, is added with the output video signal of the feedback type comb filter, and is obtained through the output terminal.

The vertical resolution is not deteriorated in a low-frequency band under a cutoff frequency of the filter circuit. In addition, when the vertical correlation exists in the video signal, it is possible to reduce the low-frequency noise which is visually conspicuous especially in the reproduced picture obtained in the VTR and improve the S/N ratio to such an extent that the vertical resolution is hardly deteriorated. Moreover, it is possible to greatly improve the S/N ratio in the high-frequency band. On the other hand, when there is no vertical correlation in the video signal, the operation of improving the S/N ratio is stopped, so as to accurately produce a video signal having virtually no deterioration in the vertical resolution. As a result, it is possible to prevent an error from being generated in the output video signal due to an operation of improving the S/N ratio at signal parts where the vertical correlation does not exist. Further, it is possible to obtain an optimum S/N ratio improvement factor by appropriately selecting respective cutoff frequencies of the filter circuit which is used for the band division and a bandpass filter within the feedback type comb filter.

It is also possible to provide a noise reduction circuit in which an equalizer circuit having an open loop construction and comprising a limiter and a filter circuit in a non-feedback path thereof, is coupled to an output side of a feedback type comb filter having a limiter and a filter circuit in the feedback path thereof. It is possible to perform an optimum noise reducing operation depending on the amplitude of the input video signal, while preventing deterioration in the vertical resolution. Further, it is possible to reduce the edge noise in which the vertical correlation exists, and improve the input pulse versus output pulse characteristic with respect to an input pulse signal. Moreover, the noise which cannot be reduced, is greatly suppressed in the high-frequency range by the comb filter. As a result, the phenomenon in which trails are formed in the horizontal direction of the picture, can be made less visually conspicuous. In addition, because the S/N ratio can be improved considerably in the feedback type comb filter for the high-frequency range with respect to the input video signal having a small level, the attenuation need not be large in the equalizer circuit in this case. Accordingly, the frequency characteristic with respect to the input video signal having a small level is improved, and it is possible to clearly reproduce the contours of images in the reproduced picture.

The present invention will be further described, by way of example, with reference to the accompanying drawings, in which:

Fig. 1 is a systematic block diagram showing an example of a conventional noise reduction circuit;

Fig. 2 shows a frequency characteristic of the block system shown in Fig. 1;

Fig. 3 is a systematic circuit diagram showing a first embodiment of a noise reduction circuit according to the present invention;

Figs 4(A) through 4(C) show frequency characteristics at each part of the circuit system shown in Fig. 3;

Fig. 5 is a systematic circuit diagram showing a second embodiment of the noise reduction circuit according to the present invention;

Figs. 6(A) through 6(E) show frequency spectrums for explaining the operation of the circuit system shown in Fig. 5;

Fig. 7 is a systematic circuit diagram showing a third embodiment of the noise reduction circuit according to the present invention;

Fig. 8 shows a frequency spectrum for explaining the operation of the circuit system shown in Fig. 7;

Fig. 9 is a circuit diagram showing the circuit system shown in Fig. 5 in more detail;

Fig. 10 is a systematic block diagram showing a fourth embodiment of the noise reduction circuit according to the present invention;

Fig. 11 shows an input versus output characteristic of a limiter in the block system shown in Fig. 10;

Figs. 12(A) through 12(C) show examples of frequency characteristics at parts of the block system shown in Fig. 10;

Figs. 13(A) und 13(B) respectively show output signal waveforms of a feedback type comb filter within the block system shown in Fig. 10, for cases where a pulse signal and a signal having a staircase waveform are applied to the feedback type comb filter as an input signal;

Figs. 14(A) and 14(B) respectively show output signal waveforms of an equalizer circuit within the block system shown in Fig. 10, for cases where a pulse signal and a signal having a staircase waveform are applied to the equalizer circuit as an input signal;

Figs. 15(A) and 15(B) respectively show output signal waveforms obtained at an output terminal of the block system shown in Fig. 10, for cases where a pulse signal and a signal having a staircase waveform are applied to an input terminal of the block system shown in Fig. 10;

Figs. 16(A) through 16(C) show other examples of frequency characteristics at parts of the block system shown in Fig. 10;

Fig. 17 is a systematic circuit diagram showing a modification of the noise reduction circuit according to the present invention; and

Fig. 18 is a systematic circuit diagram showing another modification of the noise reduction circuit according to the present invention.

A noise reduction circuit 12 shown in Fig. 1, is the third conventional noise reduction circuit described before. In Fig. 1, an input video signal (a reproduced luminance signal, for example) is applied to an input terminal 13, and is supplied to a 1H delay circuit 15 through an adding circuit 14, where *H* represents one horizontal scanning period of the input video signal. An output signal of the adding circuit 14 which is delayed by a delay time of 1H in the 1H delay circuit 15, is supplied to an adding circuit 16. The adding circuit 16 adds the output signal of the 1H delay circuit 15 and the input video signal applied to the input terminal 13, and produces a video signal component which has the vertical correlation and is reduced of the noise. The output video signal component of the adding circuit 16 is supplied to a coefficient multiplier 17 which multiplies a coefficient to the video signal component, and output signal of the coefficient multiplier 17 is fed back to the adding circuit 14.

The adding circuit 14, the 1H delay circut 15, the adding circuit 16, and the coefficient multiplier 17, constitute a feedback type comb filter. The feedback type comb filter has a comb filter characteristic in which center frequencies of pass bands are even number multiples of 1/2 the horizontal scanning frequency $f_H$, and center frequencies of attenuation bands are odd number multiplss of $f_H/2$.

An output signal of the feedback type comb filter, that is, the output signal of the adding circuit 16, is subtracted from the input video signal applied to the input terminal 13, in a subtracting circuit 18. As a result, a signal made up of the noise within the input video signal and a video signal component having no vertical correlation, is obtained from the subtracting circuit 18. The output signal of the subtracting circuit 18 is supplied to a lowpass filter 20 having a cutoff frequency $f_c$. Only a low-frequency component is obtained from the lowpass filter 20, and this low-frequency component is supplied to an adding circuit 21.

On the other hand, the output video signal of the adding circuit 16 is supplied to an equalizer circuit 19, and a signal having a predetermined characteristic is obtained from the equalizer circuit 19. The output signal of the equalizer circuit 19 is supplied to the adding circuit 21 and is added with the output low-frequency component of the lowpass filter 20. An output signal of the adding circuit 21 is obtained through an output terminal 22.

The conventional noise reduction circuit shown in Fig. 1, has a frequency characteristic shown in Fig. 2. As may be seen from Fig. 2, the conventional noise reduction circuit has a frequency characteristic which is flat in a frequency band under the cutoff frequency $f_c$ of the lowpass filter 20, and has a feedback type comb filter characteristic in which center frequencies of pass bands are natural number multiples of the horizontal scanning frequency $f_H$. For this reason, according to the conventional noise reduction circuit shown in Fig. 1, it is possible to reduce the noise in the high-frequency band over the cutoff frequency $f_c$, and it is possible to prevent deterioration in the vertical resolution which is visually conspicuous in the low-frequency band under the cutoff frequency $f_c$.

However, in this conventional noise reduction circuit, the cutoff frequency $f_c$ of the lowpass filter 20 is inevitably selected to a frequency in the range of 2 MHz to 3 MHz. Thus, as may be seen from the frequency characteristic shown in Fig. 2, there is a problem in that it is impossible to reduce the low-frequency noise (in the range of 1 MHz) which is visually conspicuous especially in the reproduced picture obtained in the VTR.

Next, description will be given with respect to embodiments of the noise reduction circuit according to the present invention, in which the problems of the conventional noise reduction circuit are eliminated.

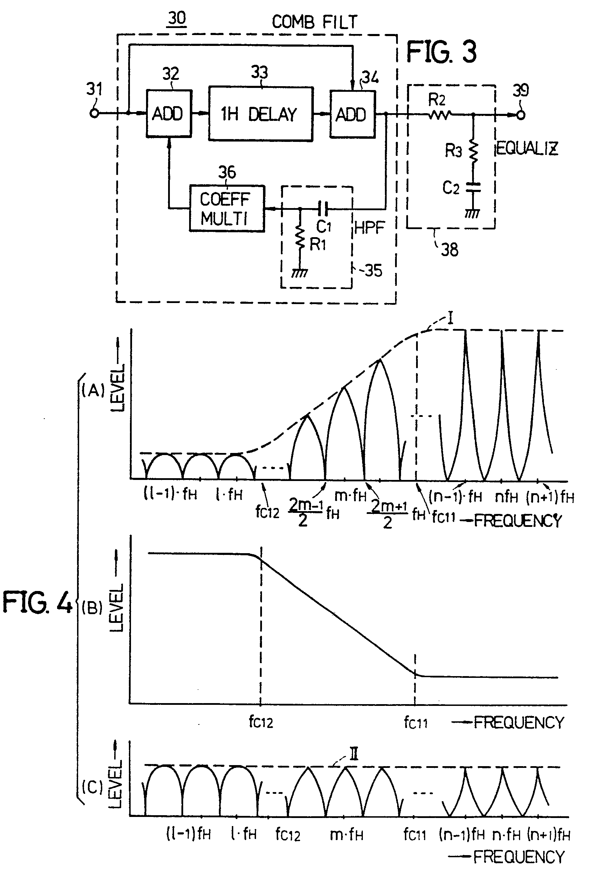

Fig. 3 shows a first embodiment of a noise reduction circuit 30 according to the present invention. In Fig. 3, an input video signal including noise, is applied to an input terminal 31. For example, the input video signal is a reproduced luminance signal which is obtained by reproducing a frequency modulated luminance signal from a recording medium and then passing the reproduced frequency modulated luminance signal through a de-emphasis circuit or the like. The input video signal is passed through an adding circuit 32 and a 1H delay circuit 33, and is supplied to an adding circuit 34. On the other hand, the input video signal is also supplied directly to the adding circuit 34. An output video signal of the adding circuit 34 is supplied to a highpass filter 35 which comprises a capacitor $C_1$ and a resistor $R_1$. The highpass filter 35 attenuates a low-frequency component under a cutoff frequency $f_{c12}$, and filters a high-frequency component. The output high-frequency component of the highpass filter 35 is supplied to a coefficient multiplier 36 which multiplies a coefficient $k$ to the high-frequency component. An output signal of the coefficient multiplier 36 is supplied to the adding circuit 32 and is added with the input video signal, and the output signal of the adding circuit 32 is supplied to the 1H delay circuit 33.

In other words, the adding circuits 32 and 34, the 1H delay circuit 33, the highpass filter 35, and the coefficient multiplier 36, constitute a feedback type comb filter 37 in which the output video signal of the 1H delay circuit 33 is fed back to the input thereof. Hence, a video signal having a frequency characteristic in which the center frequencies of the pass bands are even number multiples of $f_H/2$ and the center frequencies of the attenuation bands are odd number multiples of $f_H/2$, is obtained from the adding circuit 34. In addition, according to the present embodiment, the feedback ratio of the high-frequency component over the cutoff frequency $f_{c12}$ is large, because the highpass filter 35 is provided in the feedback path which includes the coefficient multiplier 36 and extends from the output of the 1H delay circuit 34 to the input of the 1H delay circuit 34. The value of the coefficient $k$ with respect to the high-frequency component, essentially becomes larger compared to the value of the coefficient $k$ with respect to the low-frequency component. Accordingly, the frequency characteristic obtained at the output of the adding circuit 34, is a comb filter characteristic in which the levels of the pass bands become larger and the pass bands become sharper (narrower) from the vicinity of the cutoff frequency $f_{c12}$ toward the higher frequencies, as may be seen from a feedback type comb filter characteristic shown in Fig. 4(A). The highpass filter 35 may be provided between the output of the coefficient multiplier 36 and the input of the adding circuit 32.

Next, description will be given with respect to an envelope characteristic $l$ indicated by a phantom line in Fig. 4(A). The envelope characteristic $l$ is obtained by connecting peak levels of the pass bands in the frequency characteristic of the feedback type comb filter 37. When it is assumed that the amplification of the 1H delay circuit 33 is equal to one, the coefficient $k$ of the coefficient multiplier 36 is greater than zero and less than one, the feedback ratio obtained by the highpass filter 35 is represented by $\beta$, the input signal voltage applied to the input terminal 31 is represented by $e_i$, and the output signal voltage of the adding circuit 24 is represented by $e_o$, the output signal voltage $e_o$ can be described by an equation

$$e_o = (e_i + k \cdot \beta \cdot e_o) + e_i.$$

Thus, the transfer function of the feedback type comb filter 37 can be described by the following equation (1), when it is assumed that a perfect vertical correlation exists in the signal.

$$e_o/e_i = 2/(1 - k \cdot \beta) \qquad (1)$$

When it is assumed that $C_1 \cdot R_1 = T$ because the highpass filter 35 comprises the capacitor $C_1$ and the resistor $R_1$, the following equation (2) can be obtained, where $\omega$ represents the angular frequency of the input signal.

$$\beta = j\omega T/(1 + j\omega T) \qquad (2)$$

Accordingly, the following equation (3) can be obtained when the equation (2) is substituted into the equation (1).

$$e_o/e_i = 2(1\pi + j\omega T)/[1 + j\omega(1 - k)T] \qquad (3)$$

The equation (3) describes the envelope characteristic $l$ in the frequency characteristic of the feedback type comb filter 37. The envelope characteristic $l$ is flat in the high-frequency band over the frequency

$$f_{c11} (= 1/[2\pi(1 - k)C_1 R_1])$$

which is determined by $(1 - k)T$, flat in the low-frequency band under the frequency

$$f_{c12} (f_{c12} = 1/(2\pi C_1 R_1),$$

where $f_{c12}$ is less than $f_{c11}$) which is determined by $T$, and is attenuated at a rate of 6 dB/oct as the frequency decreases toward the frequency $f_{c12}$ from the frequency $f_{c11}$, as shown in Fig. 4(A). The level difference between the frequencies $f_{c11}$ and $f_{c12}$ can be described by

$20\log[1/(1 - k)]$ db.

Therefore, as shown in Fig. 4(A), the feedback type comb filter 37 has the frequency characteristic in which the center frequencies of the pass bands are even number multiples of 1/2 the horizontal scanning frequency $f_H$, and the pass bands are sharper (narrower) in the higher frequencies compared to the lower frequencies. A video signal which is obtained from the feedback type comb filter 37, is supplied to an equalizer circuit 38 which comprises resistor $R_2$ and $R_3$ and a capacitor $C_2$, and a signal having a predetermined characteristic is obtained from the equalizer circuit 38. The output signal of the equalizer circuit 38 is obtained through an output terminal 39. The equalizer circuit 38 has a frequency characteristic complementary to the envelope characteristic $l$ in the frequency characteristic of the feedback type comb filter 37. Accordingly, the circuit construction of the equalizer circuit 38 becomes as shown in Fig. 3. As shown in Fig. 4(B), the frequency characteristic of the equalizer circuit 38 is flat in the frequency band under a first cut-off frequency $f_{c12}$, flat in the frequency band over a second cutoff frequency $f_{c11}$, and slopes at a rate of −6 dB/oct as the frequency increases from the first cutoff frequency $f_{c12}$ to the second cutoff frequency $f_{c11}$. The first cutoff frequency $f_{c12}$ is determined by a product of the capacitance of the capacitor $C_2$ and a sum of the resistances of the resistors $R_2$ and $R_3$. On the other hand, the second cutoff frequency $f_{c11}$ is determined by a product of the capacitance of the capacitor $C_2$ and the resistor of the resistor $R_3$. The constants of the circuit elements in the highpass filter 35 and the equalizer circuit 38 are thus selected as follows.

$$R_2 = k \cdot R_1$$
$$R_3 = (1 - k)R_1$$
$$C_1 = C_2$$

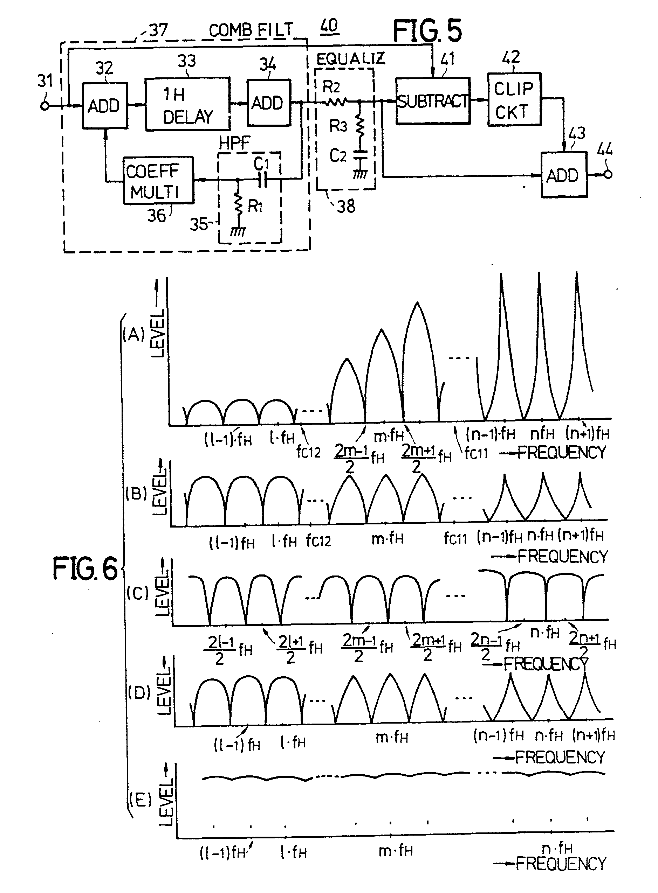

The frequency characteristic of the noise reduction circuit 30 which exists between the input terminal 31 and the output terminal 39, is a sum of the frequency characteristic of the feedback type comb filter 37 shown in Fig. 4(A) and the frequency characteristic of the equalizer circuit 38 shown in Fig. 4(B). As a result, the frequency characteristic of the noise reduction circuit 30 becomes as shown in Fig. 4(C). As may be seen from Fig. 4(C), the noise reduction circuit 30 has a frequency characteristic in which the pass bands and the attenuation bands are the same as the pass bands and the attenuation bands in the frequency characteristic of the feedback type comb filter 37 throughout the entire frequency band, the pass bands gradually become sharper (narrower) toward the higher frequencies in the frequency band between the frequencies $f_{c12}$ and $f_{c11}$, and the pass bands are sharpest (narrowest) in the high-frequency band over the frequency $f_{c11}$. Further, the envelope characteristic in the frequency characteristic of the noise reduction circuit 30, that is, a peak frequency characteristic in the comb filter characteristic, is substantially flat throughout the entire frequency band as indicated by a phantom line II in Fig. 4(C). In Figs. 4(A) through 4(C), coefficients *l*, *m*, and *n* are natural numbers, and satisfy a relation $l < m < n$. The same coefficients are used in Figs. 6(A) through 6(E) which will be described later on.

According to the present embodiment, the noise reduction circuit 30 blocks the frequency components having frequencies which are odd number multiples of 1/2 the horizontal scanning frequency $f_H$. As a result, it is possible to reduce the noise which is mixed in the input signal (reproduced luminance signal) approximately throughout the entire frequency band. Because the noise reduction circuit 30 shows a narrow comb filter characteristic especially toward the high-frequency band, it is possible to greatly reduce the noise in the high-frequency band. In addition, the cutoff frequency $f_{c12}$ of the highpass filter 35 is in the range of 800 kHz, for example, and is sufficiently low compared to the cutoff frequency $f_c$ of the lowpass filter 20 within the conventional noise reduction circuit 12 shown in Fig. 1. For this reason, it is possible to greatly reduce the low-frequency noise which is visually conspicuous especially in the reproduced picture obtained from the VTR. Moreover, according to the present embodiment, the pass bands are wider in the low-frequency band under the frequency $f_{c12}$, and the pass bands are narrower in the high-frequency band over the frequency $f_{c11}$. Thus, it is possible to obtain a S/N ratio improvement factor which is approximately in the same range as the S/N ratio improvement factor obtainable in the conventional noise reduction circuit 12 shown in Fig. 1.

Next, description will be given with respect to a second embodiment of the noise reduction circuit according to the present invention by referring to Fig. 5. In Fig. 5, those parts which are the same as those corresponding parts in Fig. 3 are designated by the same reference numerals, and their description will be omitted. In a noise reduction circuit 40 shown in Fig. 5, the output video signal of the equalizer circuit 38 is supplied to a subtracting circuit 41 which subtracts the output video signal of the equalizer circuit 38 from the input video signal obtained through the input terminal 31. As a result, a frequency characteristic shown in Fig. 6(C) is obtained at the output of the subtracting circuit 41. This frequency characteristic is obtained by subtracting the frequency characteristic shown in Fig. 6(B) (identical to the frequency characteristic shown in Fig. 4(C)) which is obtained at the output of the equalizer circuit 38, from a frequency characteristic which is flat throughout the entire frequency band.

In the frequency characteristic shown in Fig. 6(C), the center frequencies of the pass bands are odd number multiples of $f_H/2$, the center frequencies of the attenuation bands are even number multiples of $f_H/2$, and the pass band characteristic in the high-frequency band over the frequency $f_{c11}$

is flat compared to the pass band characteristic in the low-frequency band under the frequency $f_{c12}$. In other words, the center frequencies of the pass bands and the center frequencies of the attenuation bands in the frequency characteristic shown in Fig. 6(C) which is obtained at the output of the subtracting circuit 41, respectively correspond to the center frequencies of the attenuation bands and the center frequencies of the pass bands in the frequency characteristic shown in Fig. 6(A) which is obtained at the output of the comb filter 37 and in the frequency characteristic shown in Fig. 6(B) which is obtained at the output of the equalizer circuit 38.

The output signal of the subtracting circuit 41 having the frequency characteristic shown in Fig. 6(C), is made up of the noise included within the input video signal (reproduced luminance signal) and the video signal component having no vertical correlation. This output signal of the subtracting circuit 41 is supplied to a clipping circuit 42. The clipping level of the clipping circuit 42 is selected in the range of a peak-to-peak level of the noise within the output signal of the subtracting circuit 41. The clipping circuit 42 has a known construction, and is designed to block a signal having a level which is smaller than the clipping level and to pass a signal having a level which is larger than the clipping level.

An output signal of the clipping circuit 42 is supplied to an adding circuit 43, and is added with the output video signal of the equalizer circuit 38. An output signal of the adding circuit 43 is obtained through an output terminal 44. In a case where the input video signal has a small level change (a strong vertical correlation), the level of the output signal of the subtracting circuit 41 is smaller than the clipping level of the clipping circuit 42, and no output is obtained from the clipping circuit 42. Accordingly, a video signal having a frequency characteristic shown in Fig. 6(D) (identical to the frequency characteristic shown in Fig. 6(B) which is obtained at the output of the equalizer circuit 6(B)), is obtained through the output terminal 44.

On the other hand, in a case where the input video signal has a large level change (virtually no vertical correlation), the video signal component having no vertical correlation is included within the input video signal to a large extent. Thus, the level of the video signal component which has no vertical correlation and is obtained from the subtracting circuit 41, is larger than the clipping level of the clipping circuit 42. Because the adding circuit 43 adds the output signal of the clipping circuit 42 and the output signal of the equalizer circuit 38, a video signal having a frequency characteristic shown in Fig. 6(E) is obtained from the adding circuit 43. This frequency characteristic shown in Fig. 6(E) is obtained by adding the frequency characteristics shown in Figs. 6(B) and 6(C), and is substantially flat throughout the entire frequency band.

Accordingly, in the case where a strong vertical correlation exists in the input video signal, the video signal having the frequency characteristic shown in Fig. 6(D) is obtained through the output terminal 44 of the noise reduction circuit 40, as in the case of the noise reduction circuit 30 described before as the first embodiment. According to the present embodiment, it is possible to obtain a satisfactory S/N ratio improvement factor approximately throughout the entire frequency band, without deteriorating the vertical resolution to a large extent in the low-frequency band. On the other hand, in the case where the video signal component having no vertical correlation is included within the input video signal to a large extent, it is undesirable to improve the S/N ratio by use of the frequency characteristic shown in Fig. 6(D). This is because an error will occur and the waveform of the video signal obtained through the output terminal 44 will be different from the original waveform of the input video signal. However, in the present embodiment, the noise reduction circuit 40 uses the frequency characteristic shown in Fig. 6(E) in such as case. Since the frequency characteristic shown in Fig. 6(E) is substantially flat throughout the entire frequency band, it is possible to minimize the error introduced in the waveform of the video signal due to the operation of improving the S/N ratio. In other words, it is possible to obtain a video signal having no deterioration in the vertical resolution. According to the noise reduction circuit 40, one of the operation of improving the S/N ratio and the operation of compensating for the deterioration in the vertical resolution, has priority over the other, so as to perform an optimum signal processing depending on the extent to which the video signal component having no vertical correlation is included within the input video signal.

The frequency characteristic of the noise reduction circuit 40 becomes as shown in Fig. 6(E) in a case where the video signal component having no vertical correlation is included within the input video signal to an extremely large extent. On the other hand, the frequency characteristic of the noise reduction circuit 40 becomes as shown in Fig. 6(D) in a case where the video signal component having no vertical correlation is only included within the input video signal to an extremely small extent. But in an inbetween case where the video signal component having no vertical correlation is included within the input video signal to a certain extent, a signal having a level which is dependent on the extent to which the video signal component having no vertical correlation is included within the input video signal, is obtained from the clipping circuit 42. For this reason, the pass bands in the frequency characteristic of the noise reduction circuit 40 gradually become wider in the frequency band over the frequency $f_{c12}$, in accordance with the level of the signal component having no vertical correlation. As a result, the pass bands in the frequency band over the frequency $f_{c12}$ in the frequency characteristic of the noise reduction circuit 40, become approximately equal to the pass bands in the frequency band under the frequency $f_{c12}$, and the frequency characteristic of the noise reduction circuit 40 becomes as shown in Fig. 6(E).

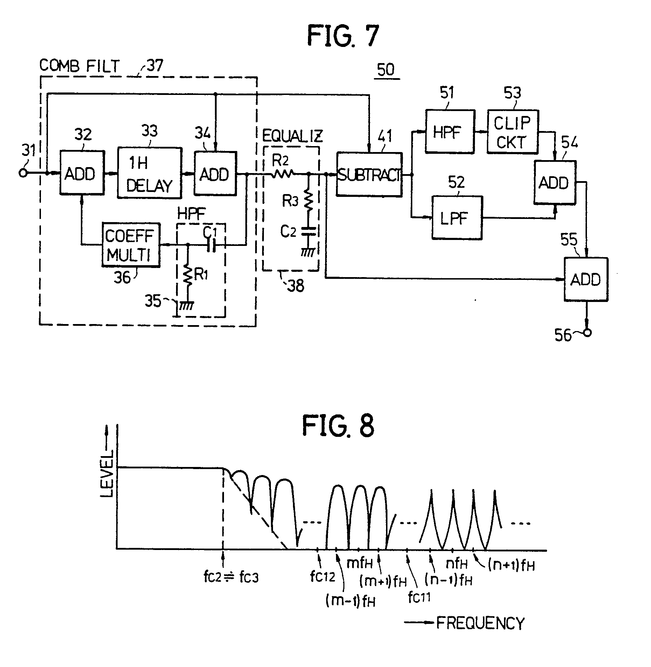

Next, description will be given with respect to a third embodiment of the noise reduction circuit according to the present invention, by referring to Fig. 7. In Fig. 7, those parts which are the same as those corresponding parts in Fig. 5 are designated by the same reference numerals, and their description will be omitted.

In Fig. 7, the output signal of the subtracting circuit 41 within a noise reduction circuit 50, is supplied to a highpass filter 51 having a cutoff frequency $f_{c2}$, and to a lowpass filter 52 having a cutoff frequency $f_{c3}$. The cutoff frequencies $f_{c2}$ and $f_{c3}$ are equal to each other, and are selected to approximately 300 kHz, for example. Accordingly, hhe output signal of the subtracting circuit 41 is band-divided into two about the frequencies $f_{c2}$ and $f_{c3}$ by the highpass filter 51 and the lowpass filter 52. A high-frequency component which is obtained from the highpass filter 51, is supplied to a clipping circuit 53. On the other hand, a low-frequency component which is obtained from the lowpass filter 52, is supplied to an adding circuit 54. The clipping circuit 53 has a construction similar to the construction of the clipping circuit 42 described before, and supplies to the adding circuit 54 a signal having a level which is larger than the clipping level. The output video signal of the equalizer circuit 38 is supplied to an adding circuit 55, and is added with an output signal of the adding circuit 54. An output signal of the adding circuit 55 is obtained through an output terminal 56.

Therefore, a frequency characteristic obtained at the output terminal 56 is constantly flat in the low-frequency band under the cutoff frequency $f_3$ regardless of the extent to which the video signal having no vertical correlation is included within the input video signal, and changes in the high-frequency band over the cutoff frequency $f_{c2}$ depending on the extent to which the video signal component having no vertical correlation is included within the input video signal, as in the case of the noise reduction circuit 40 described before.

In other words, in the case where the input video signal includes the video signal component having no vertical correlation, the level of the signal component within the output signal of the subtracting circuit 41, is small compared to the level of the noise component. The signal component and the noise component within the output signal of the subtracting circuit 41, which are in the high-frequency band over the cutoff frequency $f_{c2}$ of the highpass filter 51, are blocked in the clipping circuit 53. Hence, the frequency characteristic of the noise reduction circuit 50 at the output terminal 56 becomes as shown in Fig. 8. As may be seen from Fig. 8, it is possible to obtain through the output terminal 56 a video signal in which only the noise is reduced and the deterioration in the vertical resolution is minimized, even in the low-frequency band between the frequencies $f_{c12}$ and $f_{c2}$ (or $f_{c3}$). In addition, since the comb filter characteristic is not obtained in the low-frequency band under the cutoff frequency $f_{c2}$ (or $f_{c3}$), the input video signal is passed as it is in this low-frequency band, and there is no deterioration in the vertical resolution in this low-frequency band.

On the other hand, in a case where the video signal component having no vertical correlation is included within the input video signal to a large extent, the level of the signal component within the output signal of the subtracting circuit 41 is large compared to the level of the noise component. A frequency component which is within the output signal of the subtracting circuit 41 and has a frequency over the cutoff frequency $f_{c2}$, is passed through the clipping circuit 53 and is supplied to the adding circuit 54. Accordingly, in this case, a frequency characteristic obtained at the output terminal 56 is substantially flat in the frequency band over the frequency $f_{c2}$, as in the frequency characteristic shown in Fig. 6(E), and further, the frequency characteristic is flat in the low-frequency band under the frequency $f_{c3}$ ($\doteqdot f_{c2}$). Thus, the input video signal is produced through the output terminal 56 as it is, without introducing deterioration in the vertical resolution.

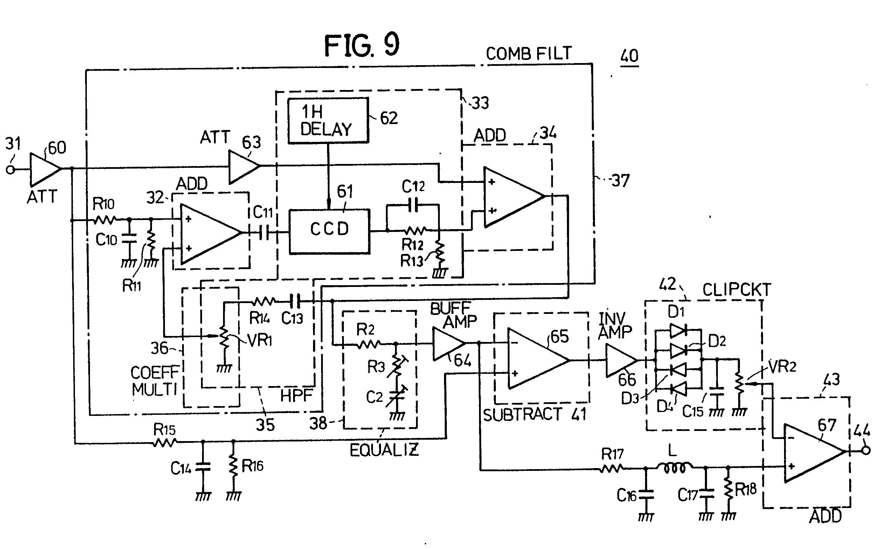

Next, description will be given with respect to a concrete circuit of the noise reduction circuit 40 according to the present invention, by referring to Fig. 9. In Fig. 9, those parts which are the same as those corresponding parts in Fig. 5 are designated by the same reference numerals, and their description will be omitted.

In Fig. 9, the input video signal applied to the input terminal 31, is attenuated in an attenuator 60, and is supplied to a delay circuit which is provided for the purpose of matching the timing of signals. This delay circuit comprises resistors $R_{10}$ and $R_{11}$ and a capacitor $C_{10}$. An output signal of this delay circuit is passed through the adding circuit 32 and a coupling capacitor $C_{11}$, and is supplied to a charge coupled device (CCD) 61. The CCD 61 delays the video signal supplied thereto by a delay time of 1H, responsive to a clock pulse from a clock pulse generator 62. An output delayed video signal of the CCD 61 is passed through a lowpass filter which comprises resistors $R_{12}$ and $R_{13}$ and a capacitor $C_{12}$, and is eliminated of the clock pulse component. An output signal of this lowpass filter is supplied to the adding circuit 34, and is added with an output signal of an attenuator 63. The attenuator 63 attenuates the output video signal of the attenuator 60 by approximately 6 dB.

The highpass filter comprises a resistor $R_{14}$, a capacitor $C_{13}$, and a variable resistor $VR_1$. The coefficient multiplier 36 comprises the variable resistor $VR_1$. The output signal of the adding circuit 34 is supplied to the highpass filter 36. On the other hand, the output signal of the adding circuit 34 is passed through the equalizer circuit 38 and a buffer amplifier 64, and is supplied to one input terminal of a differential amplifier 65. The output video signal of the attenuator 60 is passed through a delay circuit which comprises resistors $R_{15}$ and $R_{16}$ and a capacitor $C_{14}$, and is supplied to the other input terminal of the differential amplifier 65. This delay circuit is provided for the purpose of matching the timing of signals, and has a delay time of 10 nsec, for example. The differential amplifier 65 constitutes the subtracting circuit 41, and an output signal of the differential amplifier 65 is supplied to an inverting amplifier 66 and is amplified by approximately 12 dB. An output signal of the inverting amplifier 66 is supplied to the clipping circuit 42.

The clipping circuit 42 comprises four germanium diodes $D_1$ through $D_4$, a capacitor $C_{15}$, and a variable resistor $VR_2$. Cathodes of the diodes $D_1$ and $D_2$, and anodes of the diodes $D_3$ and $D_4$, are commonly connected to a non-grounded terminal of the capacitor $C_{15}$ and to a non-grounded terminal of the variable resistor $VR_2$. A differential amplifier 67 constitutes the adding circuit 43. An output video signal of the buffer amplifier 64, is passed through a delay circuit which comprises resistors $R_{17}$ and $R_{18}$, a coil $L$, and capacitors $C_{16}$ nd $C_{17}$, and is supplied to a non-inverting input terminal of the differential amplifier 67. This delay circuit is provided for the purpose of matching the timing of signals, and has a delay time of several tens of nsec, for example. A signal which is obtained through a slider of the variable resistor $VR_2$, is supplied to an inverting input terminal of the differential amplifier 67.

For example, constants of the circuit elements shown in Fig. 9 are selected as follows.

$$R_2=R_3=R_{12}=R_{13}=R_{14}=R_{17}$$
$$=R_{18}=VR_1=1\ k\Omega$$
$$C_{11}=0.1\ \mu F$$
$$C_2=C_{13}=120\ pF$$
$$C_{12}=C_{17}=27\ pF$$
$$C_{14}=22\ pF$$
$$C_{15}=180\ pF$$
$$C_{16}=5pF$$

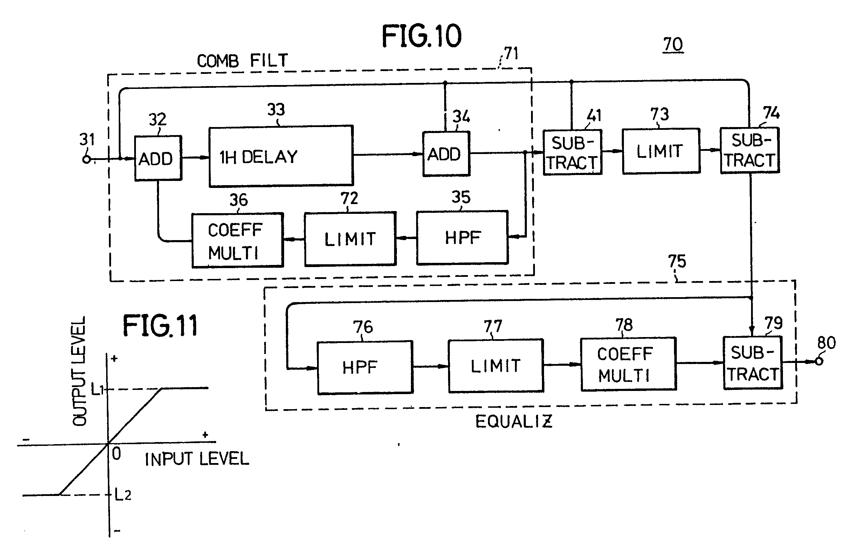

Next, description will be given with respect to a fourth embodiment of the noise reduction circuit according to the present invention, by referring to Fig. 10. In Fig. 10, those parts which are the same as those corresponding parts in Fig. 5 are designated by the same reference numerals, and their description will be omitted. In a noise reduction circuit 70 shown in Fig. 10, the input video signal such as the reproduced luminance signal, is applied to the input terminal 31 and is supplied to a feedback type comb filter 71. A feedback path of the feedback type comb filter 71 is constituted by the highpass filter 35, a limiter 72, and the coefficient multiplier 36 which are coupled in series. The video signal obtained from the adding circuit 34 within the feedback type comb filter 71, has a frequency characteristic in which the center frequencies of the pass bands are even number multiples of $f_H/2$ and the center frequencies of the attenuation bands are odd number multiples of $f_H/2$.

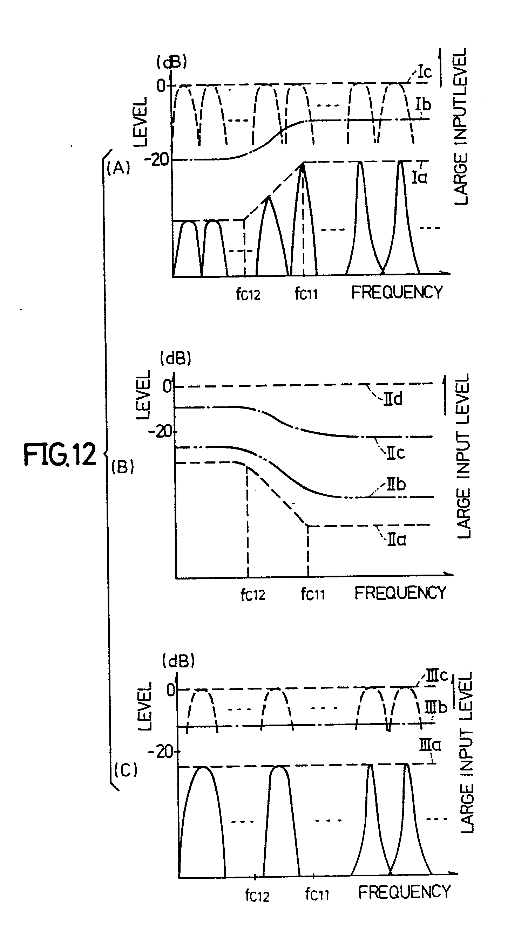

The feedback type comb filter 71 is different from the feedback type comb filter 37 described before, in that the limiter 72 is provided in the feedback path of the feedback type comb filter 71. Hence, the comb filter characteristic of the feedback type comb filter 71 changes depending on the extent to which the vertical correlation exists in the input video signal and the amplitude of the input video signal. The limiter 72 has a frequency characteristic shown in Fig. 11. The output high-frequency component of the highpass filter 35, having an amplitude between limiting levels $L_1$ and $L_2$, is passed as it is through the limiter 72. On the other hand, the output high-frequency component of the highpass filter 35, having an amplitude which exceeds the limiting level $L_1$ or $L_2$, is amplitude-limited to the limiting level $L_1$ or $L_2$ by the limiter 72. The video signal which is obtained from the adding circuit 34, is the video signal component which is within the input video signal and has the vertical correlation. Hence, the high-frequency component of the output video signal of the adding circuit 34, is supplied to the limiter 72. Therefore, when the input video signal applied to the input terminal 31 is a video signal in which the vertical correlation only exists to a small extent in the high-frequency band, or a video signal in which the vertical correlation exists but has a small amplitude, the signal level at the input side of the limiter 72 will lie between the limiting levels $L_1$ and $L_2$, and the video signal applied to the limiter 72 will pass as it is and will be supplied to the coefficient multiplier 36. In other words, the feedback ratio of the high-frequency component becomes large in the feedback type comb filter 71, with respect to the above input video signal. And, the value of the coefficient $k$ with respect to the high-frequency component, becomak large compared to the value of the coefficient $k$ with respect to the low-frequency component. As a result, the frequency characteristic of the feedback type comb filter 71 indicated by a solid line in Fig. 12(A) and having an envelope characteristic la indicated by a phantom line, becomes essentially the same as the frequency characteristic of the feedback type comb filter 37 described before. However, as the extent to which the vertical correlation exists and the amplitude both increase in the high-frequency band of the input video signal which is applied to the input terminal 31, the signal level (amplitude) becomes large at the input side of the limiter 72. The signal level at the input side of the limiter 72 will finally exceed the limiting level $L_1$ or $L_2$. For this reason, when the video signal applied to the limiter 72 has a large vertical correlation and a large amplitude and the signal level at the input side of the limiter 72 exceeds the limiting level $L_1$ or $L_2$, the level of the input video signal applied to the input terminal 31 becomes relatively larger than the output signal level of the coefficient multiplier 36. This means that the feedback ratio of the feedback type comb filter 71 in the high-frequency band becomes smaller. As a result, the widths of the pass bands in the high-frequency band, approaches the widths of the pass bands in the low-frequency band. Accordingly, in this case, an envelope characteristic lb in the frequency characteristic of the feedback type comb filter 71 becomes as indicated by a one dot chain line in Fig. 12(A). When the input video signal applied to the input terminal 31 has a large vertical correlation and a large amplitude, such as a case where the input video signal is related to a vertical line in a picture, for example, the level of the output signal of the coefficient multiplier 36 is negligible compared to the level of the input video signal in the adding circuit 32. Thus, the frequency characteristic of the feedback type comb filter 71 becomes essentially the same as a frequency characteristic of a comb filter having no feedback path, and an envelope characteristic lc of the frequency characteristic in this case becomes as indicated by a phantom line in Fig. 12(A). Therefore, compared to the feedback type comb filter 37 which has the same feedback ratio and no limiter, it is possible to improve the input pulse versus output pulse characteristic with respect to a video signal having an extremely large level part which is related to the vertical direction of the picture, and improve the vertical resolution of the picture.

As described heretofore, the output video signal of the adding circuit 34 has one of the frequency characteristics shown in Fig. 12(A) depending on the level of the input video signal applied to the input terminal 31 and depending on the extent to which the vertical correlation exists in the input video signal applied to the input terminal 31. The output video signal is supplied to the subtracting circuit 41 and is subjected to a subtraction with the input video signal which is obtained from the input terminal 31. The output video signal of the adding circuit 34 is made up of the signal component which is within the input video signal (luminance signal) and has the vertical correlation. Thus, a signal made up of the noise included in the input video signal, the signal component having no vertical correlation, and a part of the signal having the vertical correlation, is obtained from the subtracting circuit 41. The output signal of the subtracting circuit 41 includes a part of the signal having the vertical correlation, because the output video signal of the adding circuit 34 has a frequency characteristic which is different from the frequency characteristic of the input video signal as may be seen from Fig. 12(A). The output signal of the subtracting circuit 41 is supplied to a limiter 73 wherein a large amplitude part in the range of the peak-to-peak value of the noise is amplitude-limited. An output signal of the limiter 73 is supplied to a subtracting circuit 74.

The subtracting circuit 74 subtracts the output signal of the limiter 73 from the input video signal which is obtained from the input terminal 31. Hence, a video signal which is reduced of the noise which appears in the vertical direction of the picture and is within the input video signal, is obtained from the subtracting circuit 74. The level of the signal component which is within the input video signal and has no vertical correlation, is normally larger than the level of the noise. A circuit part which is constituted by the subtracting circuits 41 and 74 and the limiter 73, is designed to minimize the deterioration in the vertical resolution by not subtracting from the input video signal the signal component which has no vertical correlation and has a level larger than the level of the noise. However, the noise reduction circuit according to the present invention will work in principle even without this circuit part.

The output video signal of the subtracting circuit 74, which is reduced of the noise which appears in the vertical direction of the picture, is supplied to a highpass filter 76 and to a subtracting circuit 79 within an equalizer circuit 75. The equalizer circuit 75 comprises the highpass filter 76, a limiter 77, a coefficient multiplier 78, and the subtracting circuit 79. The highpass filter 76 has a construction similar to the construction of the highpass filter 35, and has a cutoff frequency $f_{c12}$. The limiter 77 and the coefficient multiplier 78 have constructions similar to the respective constructions of the limiter 72 and the coefficient multiplier 36. However, it is possible to change the time constant of the highpass filter 76, the limiting levels of the limiter 77, and the coefficient of the coefficient multiplier 78, according to the needs. The frequency characteristic of the equalizer circuit 75 becomes as indicated by a phantom line IIa in Fig. 12(B) with respect to the input video signal having a small amplitude (level) such that the signal applied to the limiter 77 will be passed through the limiter 77 as it is without being subjected to the amplitude limitation. In other words, since the coefficient of the coefficient multiplier 78 is less than one, the frequency characteristic of the equalizer circuit 75 is flat in the high-frequency band over the frequency $f_{c11}$, flat in the low-frequency range under the frequency $f_{c12}$, and slopes at a rate of −6 dB/oct in the frequency band between the frequencies of $f_{c11}$ and $f_{c12}$. Thus, the frequency characteristic of the equalizer circuit 75 is complementary to the envelope characteristic Ia in the frequency characteristic of the feedback type comb filter 71 shown in Fig. 12(A).

As the amplitude of the input video signal gradually becomes larger in the high-frequency band such that the signal level at the input side of the limiter 77 exceeds the limiting level of the limiter 77, the level of the output signal of the coefficient multiplier 78 becomes relatively small compared to the level of the output signal of the subtracting circuit 74. As a result, the frequency characteristic of the equalizer circuit 75 gradually changes as shown in Fig. 12(B), in the sequence of the characteristics IIa, IIb, IIc and IId. In other words, the frequency characteristic of the equalizer circuit 75 is variable depending on the level of the high-frequency component of the input video signal, and is complementary to the frequency characteristic of the feedback type comb filter 71 shown in Fig. 12(A). The equalizer circuit 75 performs the operation of reducing the noise in the video signal having a small level, but also reduces the high-frequency noise regardless of the existence of the vertical correlation in the video signal. An output video signal of the subtracting circuit 79, is obtained through an output terminal 80.

The frequency characteristic of the noise reduction circuit 70 shown in Fig. 10, is a sum of the frequency characteristics shown in Figs. 12(A) and 12(B). Hence, when the input video signal applied to the input terminal 31 has a small level such that the signals applied to the limiters 72 and 77 will pass as they are, the frequency characteristic of the noise reduction circuit 70 assumes a comb-shaped characteristic as indicated by a solid line in Fig. 12(C). An envelope characteristic IIIa of this frequency characteristic, is a sum of the characteristics Ia and IIa shown in Figs. 12(A) and 12(B). In the frequency characteristic indicated by the solid line in Fig. 12(C), the center frequencies of the pass bands are even number multiples of $f_H/2$, and the center frequencies of the attenuation bands are odd number multiples of $f_H/2$. Further, the pass bands in the high-frequency band over the frequency $f_{c12}$ is sharper (narrower) compared to the pass bands in the low-frequency band under the frequency $f_{c12}$. Moreover, the envelope characteristic IIIA indicated by a phantom line in Fig. 12(C), which is obtained by connecting the peak levels of the pass bands, is substantially flat throughout the entire frequency band.

As the level of the input video signal applied to the input terminal 31 gradually becomes larger, the envelope characteristic in the frequency characteristic of the noise reduction circuit 70 gradually changes as shown in Fig. 12(C), in the sequence of the characteristics IIIa, IIIb, and IIIc. In addition, the widths of the pass bands in the high-frequency band over the frequency $f_{c12}$ gradually becomes wider, and finally become the same as the widths of the pass bands in the low-frequency band under the frequency $f_{c12}$. The frequency characteristic of the noise reduction circuit 70 shown in Fig. 12(C) changes depending on the level of the input video signal and the extent to which the vertical correlation exists in the input video signal. However, in the frequency characteristic shown in Fig. 12(C), the center frequencies of the pass bands are always even number multiples of $f_H/2$ and the center frequencies of the attenuation bands are always odd number multiples of $f_H/2$.

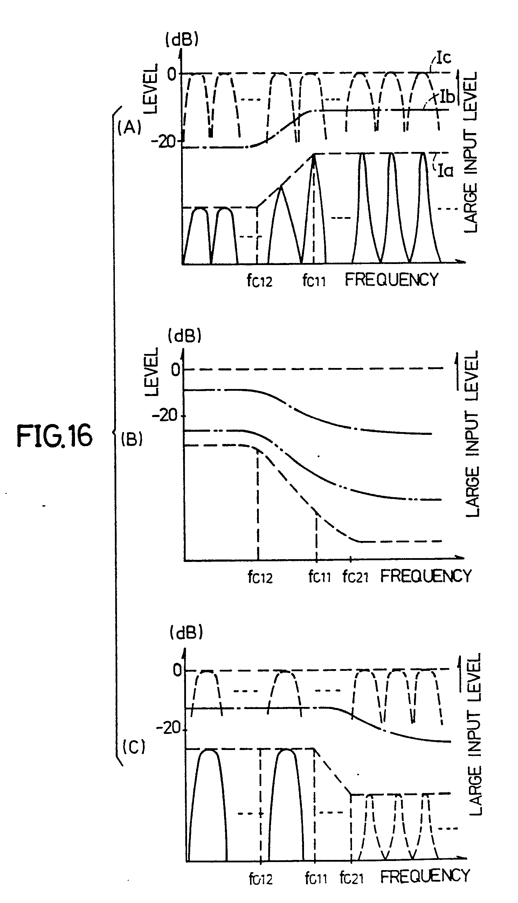

In a case where the curving point in the frequency characteristic of the equalizer circuit 75 is selected to a frequency $f_{c21}$ which is higher than the frequency $f_{c11}$, the frequency characteristic of the equalizer circuit 75 becomes as shown in Fig. 16(B). On the other hand, the frequency characteristic of the feedback type comb filter 71 becomes as shown in Fig. 16(A) which is the same as the frequency characteristic shown in Fig. 12(A). As a result, the frequency characteristic of the noise reduction circuit 70 obtained in this case, becomes as shown in Fig. 16(C).

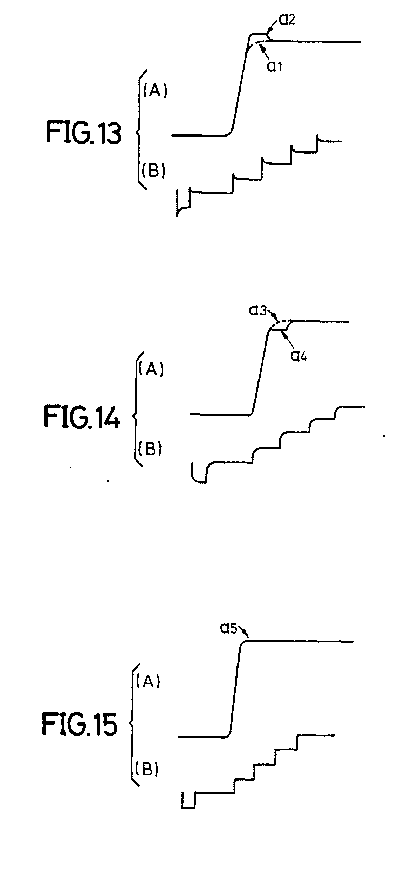

According to the present embodiment, the output signal waveform of the adding circuit 34 becomes as indicated by a solid line in Fig. 13(A) when the input video signal applied to the input terminal 31 has a waveform which is in the form of a sharp pulse. In Fig. 13(A), a part of the waveform which should originally be as indicated by a phantom line $a_1$, becomes as indicated by a solid line $a_2$. On the other hand, when the same video signal having the waveform which is in the form of the sharp pulse is supplied to the equalizer circuit 75, the output signal waveform of the subtracting circuit 79 becomes as indicated by a solid line in Fig. 14(A). In Fig. 14(A), a part of the waveform which should originally be as indicated by a phantom line $a_3$, becomes as indicated by a solid line $a_4$. In the present embodiment, the feedback type comb filter 71 and the equalizer circuit 75 are coupled in series, and thus, the waveform shown in Fig. 15(A) is obtained through the output terminal 80. In Fig. 15(A), the waveform is flat at a part $a_5$, and is approximately the same as the waveform of the input video signal applied to the input terminal 31. Therefore, according to the present embodiment, it is possible to improve the input pulse versus output pulse characteristic with respect to an input video signal having the form of a pulse.

In a case where the input video signal applied to the input terminal 31 has a staircase waveform, the output signal waveform of the feedback type comb filter 71 becomes as shown in Fig. 13(B). In Fig. 13(B), the waveform has parts where an overshoot occurs. When the same staircase waveform is supplied to the equalizer circuit 75, the output signal waveform of the equalizer circuit 75 becomes as shown in Fig. 14(B). Accordingly, when the staircase waveform is applied to the input terminal 31 of the noise reduction circuit 70, the waveform shown in Fig. 15(B) is obtained through the output terminal 80. The waveform shown in Fig. 15(B) is approximately the same as the waveform of the original signal which is applied to the input terminal 31.

According to the present embodiment, the feedback path of the feedback type comb filter 71 is essentially closed by the limiter 72 at least with respect to the input video signal having a large level, and the widths of the pass bands in the frequency characteristic of the feedback type comb filter 71 are widened. In addition, it is possible to improve the input pulse versus output pulse characteristic with respect to the horizontal and vertical directions of the picture, because the equalizer circuit 75 has a flat frequency characteristic which is similar to a frequency characteristic obtained when there is no signal path from the highpass filter 76 to the input side of the subtracting circuit 79. When the input video signal applied to the input terminal 31 has a small level, it is possible to improve the S/N ratio and keep the deterioration in the frequency characteristic to a minimum. Further, the noise (residual noise) which cannot be reduced by a noise reduction circuit only comprising the equalizer 75, can be suppressed greatly in the high-frequency range. Thus, the phenomenon in which trails are formed in the horizontal direction of the picture, can be made less visually conspicuous.

It is possible to couple the equalizer circuit 75 in series at the input side of the feedback type comb filter 71. However, the 1H delay circuit 33 generally comprises a charge coupled device (CCD) and a clock signal generator, and noise introduced from the clock signal generator may mix into the output signal of the 1H delay circuit 33. Moreover, although the feedback type comb filter 71 introduces deterioration in the picture quality with respect to the signal component having no vertical correlation, the equalizer circuit 75 cannot compensate for this deterioration when the equalizer circuit 75 is coupled in series at the input side of the feedback type comb filter 71. Therefore, it is desirable to couple the equalizer circuit 75 as shown in the embodiment described before.

The present invention is not limited to the embodiments described heretofore. For example, since there is a predetermined limit to the frequency band of the input video signal which is applied to the input terminal 31, it is possible to employ a bandpass filter having a cutoff frequency which is in the range of a maximum frequency of the input video signal.

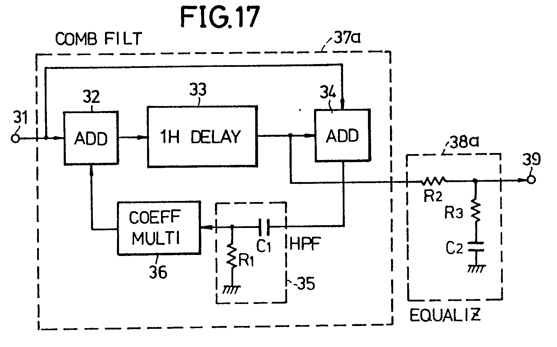

In addition, the input signal or the output signal of the 1H delay circuit 33 may be supplied to the equalizer circuit 38 shown in Fig. 3. Fig. 17 shows a modification in which the output signal of the 1H delay circuit 33 is supplied to an equalizer circuit 38a. In Fig. 17, those parts which are the same as those corresponding parhs in Fig. 3 are designated by the same reference numerals, and their description will be omitted. In this case, when the input signal voltage applied to the input terminal 31 is represented by $e_i$ and the output signal voltage of the adding circuit 34 is represented by $e_o$ as described before, the output signal voltage of the 1H delay circuit 33 becomes equal to $(e_o - e_i)$, and a transfer function of a feedback type comb filter 37a shown in Fig. 10 can be described by the following equation (4), where the coefficients $k$ and $T$ are the same as the coefficients $k$ and $T$ in the equations (1) through (3) described before.

$$(e_o - e_i)/e_i = [1 + j\omega(1+k)T]/[1 + j\omega(1-k)T] \qquad (4)$$

Accordingly, the envelope characteristic in the frequency characteristic of the feedback type comb filter 37a, is similar to the envelope characteristic $l$ shown in Fig. 4(A), but in this case, a frequency corresponding to the frequency $f_{c11}$ is determined by $(1-k)T$ and a frequency corresponding to the frequency $f_{c12}$ is determined by $(1+k)T$. Further, the circuit construction of the equalizer circuit 38a shown in Fig. 17 is the same as the circuit construction of the equalizer circuit 38, but in this case, the resistance of the resistor $R_2$ is selected to $2kR_1$ and the resistance of the

resistor $R_3$ is selected to $(1-k)R_1$. In this case, $C_1=C_2$ as in the case of the equalizer circuit 38.

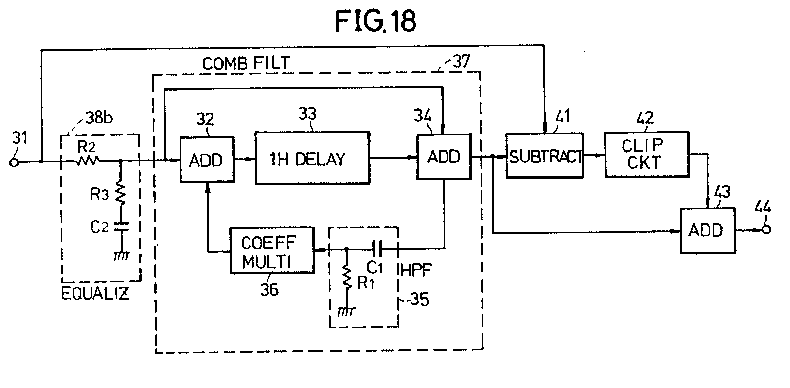

In addition, the equalizer circuit 38 may be provided on the input side of the feedback type comb filter 37 shown in Fig. 5. Fig. 18 shows a modification in which an equalizer circuit 38b is provided on the input side of the feedback type comb filter 37. In Fig. 18, those parts which are the same as those corresponding parts in Fig. 5 are designated by the same reference numerals, and their description will be omitted. In this case, the subtracting circuit 41 must be designed to perform a subtraction between the output video signal of the feedback type comb filter 37 and the input video signal applied to the input terminal 31.

The circuit which constitutes the feedback path of the feedback type comb filter 71, comprises the highpass filter 35, the limiter 72, and the coefficient multiplier 36 which are coupled in series. However, the sequence in which the highpass filter 35, the limiter 72, and the coefficient multiplier 36 are coupled in series, is not limited to the embodiment described before. The limiter 72 must be coupled to the output side of the highpass filter 35, however, the coefficient multiplier 36 may be coupled to the input side of the limiter 72 or to the input side of the highpass filter 35. This holds true for the highpass filter 76, the limiter 77, and the coefficient multiplier 78 of the equalizer circuit 75.

The input video signal which is applied to the input terminal 31, is not limited to the luminance signal, and for example, color difference signals or a carrier chrominance signal may be applied as the input terminal 31. In a case where the carrier chrominance signal is applied to the input terminal 31, it is necessary to use an equalizer circuit having a frequency characteristic which is symmetrical about the chrominance subcarrier frequency, within a frequency range of $\pm\Delta f$ from a center frequency which is equal to the chrominance subcarrier frequency, instead of the highpass filter 35. This is because the output carrier chrominance signal will become non-symmetrical about the chrominance subcarrier frequency when the highpass filter 35 is used. Moreover, when the noise reduction circuit according to the present invention is used with respect to the carrier chrominance signal, it is necessary to use a subtracting circuit instead of the adding circuit 34.

In addition, the present invention can be applied to the noise reduction of a luminance signal within a PAL system of SECAM system color video signal, and also to a carrier chrominance signal within the PAL system color video signal. In this case, it is possible to use a 2H delay circuit instead of the 1H delay circuit. Moreover, the frequency of the curving point in the frequency characteristic of the equalizer circuit 75 need not coincide with that of the feedback type comb filter 71, and may be selected to other frequencies.

## Claims

1. A noise reduction circuit for a video signal, said noise reduction circuit comprising a feedback type comb filter (37, 71) in which an output video signal of a delay circuit (33), which delays a video signal by one or two horizontal scanning periods, is fed back to an input side of said delay circuit through a feedback path; and an equalizer circuit (38, 75) coupled in series with said feedback type comb filter, characterised in that said feedback path comprises a highpass or bandpass filter circuit (35) and a coefficient multiplier (36) which are coupled in series, said equalizer circuit having a frequency characteristic complementary to an envelope characteristic in a frequency characteristic of said feedback type comb filter.

2. A noise reduction circuit as claimed in Claim 1, characterised in that said feedback type comb filter (37) comprises an input terminal (31) applied with an input signal, said input signal being an input video signal which is to be reduced of noise or an output video signal of said equalizer circuit (38); said delay circuit (33); an operation circuit (34) for performing an addition or a subtraction between the output video signal of said delay circuit and the input signal applied to said input terminal; said feedback path supplied with an output signal of said operation circuit, for filtering a high-pass component of the output signal of said operation circuit and for multiplying a coefficient to the high-frequency component; and an adding circuit (32) for adding an output signal of said feedback path and the input signal applied to said input terminal, and for supplying an output signal to said delay circuit, a video signal having a comb filter characteristic being obtained from an input side or an output signal of said operation circuit.

3. A noise reduction circuit as claimed in claim 1, characterized in that said feedback type comb filter (71) comprises an input terminal (31) applied with an input video signal which is to be reduced of noise; said delay circuit (33); an operation circuit (34) for performing an addition or a subtraction between the output video signal of said delay circuit and the input video signal applied to said input terminal; said feedback path supplied with an output signal of said operation circuit, said feedback path comprising said highpass or bandpass filter circuit (35) for filtering a predetermined frequency component of the output signal of said operation circuit, a first limiter (72) essentially supplied with an output signal of said highpass or bandpass filter circuit (35), for amplitude-limiting an amplitude part which is larger than a limiting level of said first limiter, and said coefficient multiplier (36) coupled in series to an input side or an output side of said first limiter, for multiplying a coefficient; and an adding circuit (32) for adding an output signal of said feedback path and the input video signal applied to said input terminal, and for supplying an output signal to said delay circuit; and that an equalizer circuit (75) comprises a filter circuit (76) supplied with an output signal of said feedback type comb filter, for filtering a predetermined frequency component; a second limiter (77) essentially supplied with an output signal of said filter circuit, for amplitude limiting the output signal of said filter circuit; another coefficient multiplier (78) coupled in series to an input side or an output side of said filter circuit or coupled in series to an output side of said second limiter (77), for multiplying a coefficient; a subtracting circuit (79) for performing a subtraction between the output signal of said feedback type comb filter and an output signal of a specific circuit, said specific circuit being constituted by said filter circuit, said second limiter, and said other coefficient multiplier (78) which are coupled in series; and an output terminal (80) through which an output video signal of said subtracting circuit is obtained.

4. A noise reduction circuit for a video signal, said noise reduction circuit comprising a feedback type comb filter (71) in which an output video signal of a delay circuit (33) which delays a video signal by one or two horizontal scanning periods, is fed back to an input side of said delay circuit through a feedback path, characterised in that said feedback path comprises a highpass or bandpass filter circuit (35) and a first coefficient multiplier (36) which are coupled in series, and that said noise reduction circuit comprises a first subtracting circuit (41) for subtracting an output video signal of said feedback type comb filter from an input signal of said feedback type comb filter; a first limiter (73) for amplitude-limiting an output signal of said first subtracting circuit; a second subtracting circuit (74) for subtracting an output signal of said first limiter from the input signal of said feedback type comb filter; and an equalizer circuit (75) supplied with an output signal of said second subtracting circuit, said equalizer circuit having a frequency characteristic complementary to an envelope characteristic in a frequency characteristic of said feedback type comb filter.

5. A noise reduction circuit as claimed in claim 4, characterized in that said feedback type comb filter (71) comprises an input terminal (31) applied with an input video signal which is to be reduced of noise; said delay circuit (33); an operation circuit (34) for performing an addition or a subtraction between the output video signal of said delay circuit and the input video signal applied to said input terminal; said feedback path supplied with an output signal of said operation circuit, said feedback path comprising said highpass or bandpass filter circuit (35) for filtering a predetermined frequency component of the output signal of said operation circuit, a second limiter (72) essentially supplied with an output signal of said highpass or bandpass filter circuit (35), for amplitude-limiting an amplitude part which is larger than a limiting level of said second limiter (72), and said first coefficient multiplier (36) coupled in series to an input side or an output side of said second limiter, for multiplying a coefficient; and an adding circuit (32) for adding an output signal of said feedback path and the input video signal applied to said input terminal, and for supplying an output signal to said delay circuit; and that said equalizer circuit (75) comprises a filter circuit (76) supplied with an output signal of said second subtracting circuit (74), for filtering a predetermined frequency component; a third limiter (77) essentially supplied with an output signal of said filter circuit (76), for amplitude limiting the output signal of said filter circuit; a second coefficient multiplier (78) coupled in series to an input side or an output side of said filter circuit or coupled in series to an output side of said third limiter, for multiplying a coefficient; a third subtracting circuit (79) for performing a subtraction between the output signal of said second subtracting circuit (74) and an output signal of a specific circuit, said specific circuit being constituted by said filter circuit, said third limiter, and said second coefficient multiplier which are coupled in series; and an output terminal (80) through which an output video signal of said third subtracting circuit is obtained.

6. A noise reduction circuit as claimed in Claim 1, characterized in that said noise reduction circuit comprises a subtracting circuit (41) for performing a subtraction between an input video signal and an output video signal of a predetermined circuit in which said feedback type comb filter and said equalizer circuit are coupled in series; a clipping circuit (42) supplied with an output signal of said subtracting circuit (41), for only passing a signal having a level which is larger than a clipping level of said clipping circuit; a first adding circuit (43) for adding an output signal of said clipping circuit and the output signal of said predetermined circuit; and an output terminal (39) through which an output signal of said first adding circuit is produced as an output video signal.

7. A noise reduction circuit as claimed in Claim 6, characterized in that said feedback type comb filter (37) comprises an input terminal (31) applied with an input signal, said input signal being an input video signal which is to be reduced of noise or an output video signal of said equalizer circuit (30); said delay circuit (33), an operation circuit (34) for performing an addition or a subtraction between the output video signal of said delay circuit and the input signal applied to said input terminal; and feedback path supplied with an output signal of said operation circuit, for filtering a high-frequency component of the output signal of said operation circuit and for multiplying a coefficient to the high-frequency component; and a second adding circuit (32) for adding an output signal of said feedback path and the input signal applied to said input terminal, and for supplying an output signal to said delay circuit, a video signal having a comb filter characteristic being obtained from an input side or an output signal of said operation circuit.

8. A noise reduction circuit as claimed in Claim 1, characterized in that said noise reduction circuit comprises a subtracting circuit (41) for performing a subtraction between an input video signal and an output video signal of a predetermined circuit in which said feedback type comb filter and said equalizer circuit are coupled in series; a filter circuit (51, 52) for dividing a frequency band of an output signal of said subtracting circuit (41) into two frequency bands so as to obtain a high-frequency component and a low-frequency component; a clipping circuit (53) supplied with the high-frequency component obtained from said filter circuit, for only passing a signal having a level which is larger than a clipping level of said clipping circuit; adding means (54, 55) for adding the low-frequency component obtained from said filter circuit, an output signal of said clipping circuit, and the output signal of said predetermined circuit; and an output terminal (56) through which an output signal of said adding means is produced as an output video signal.

9. A noise reduction circuit as claimed in Claim 8, characterized in that said feedback type comb filter (37) comprises an input terminal (31) applied with an input signal, said input signal being an input video signal of said equalizer circuit; said delay circuit (33); an operation circuit (34) for performing an addition or a subtraction between the output video signal of said delay circuit and the input signal applied to said input terminal; said feedback path supplied with an output signal of said operation circuit, for filtering a high-frequency component of the output signal of said operation circuit and for multiplying a coefficient to the high-frequency component; and an adding circuit (32) for adding an output signal of said feedback path and the input signal applied to said input terminal, and for supplying an output signal to said delay circuit, a video signal having a curb filter characteristic being obtained from an input side or an output signal of said operation circuit.

**Patentansprüche**

1. Rauschverminderungsschaltung für ein Videosignal, welche Rauschverminderungsschaltung ein Rückkopplungskammfilter (37, 71), in dem ein Videoausgangssignal von einer Verzögerungsschaltung (33), die ein Videosignal um eine oder zwei Horizontalabtastperioden verzögert, über eine Rückkopplungsleitung auf eine Eingangsseite der Verzögerungsschaltung rückgekoppelt wird, und eine Ausgleichsschaltung (38, 75) aufweist, die in Serie zum Rückkopplungskammfilter geschaltet ist, dadurch gekennzeichnet, daß die Rückkopplungsleitung eine Hochpaß- oder eine Bandpaßfilterschaltung (35) und einen Koeffizientenmultiplikator (36) aufweist, die in Serie geschaltet sind, und daß die Ausgleichsschaltung eine Frequenzcharakteristik aufweist, die komplementär zur Einhüllungskennlinie einer Frequenzcharakteristik des Rückkopplungskammfilters ist.

2. Rauschverminderungsschaltung nach Anspruch 1, dadurch gekennzeichnet, daß das Rückkopplungskammerfilter (37) einen Eingangsanschluß (31) aufweist, dem ein Eingangssignal zugeführt wird, das ein Videoeingangssignal ist, dessen Rauschanteil zu vermindern ist, oder das ein Videoausgangssignal der Ausgleichsschaltung (38) ist; die Verzögerungsschaltung (33); eine Operationsschaltung (34) zum Ausführen einer Addition oder einer Subtraktion zwischen dem Videoausgangssignal der Verzögerungsschaltung und dem dem Eingangsanschluß zugeführten Videoeingangssignal; die Rückkopplungsleitung, der ein Ausgangssignal der Operationsschaltung zum Herausfiltern einer Hochfrequenzkomponente aus dem Ausgangssignal der Operationsschaltung und zur Multiplikation dieser Hochfrequenzkomponente mit einem Koeffizienten zugeführt wird; und eine Additionsschaltung (32) zum Addieren eines Ausgangssignals der Rückkopplungsleitung und des Eingangssignals, das dem Eingangsanschluß zugeführt wird, und zum Zuführen eines Ausgangssignals zu der Verzögerungsschaltung, wobei ein Videosignal mit einer Kammfiltercharakteristik von einer Eingangsseite oder als ein Ausgangssignal der Operationsschaltung erhalten wird.

3. Rauschverminderungsschaltung nach Anspruch 1, dadurch gekennzeichnet, daß das Rückkopplungskammfilter (71) einen Eingangsanschluß (31) aufweist, dem ein Videoeingangssignal zugeführt wird, dessen Rauschanteil zu vermindern ist; die Verzögerungsschaltung (33); eine Operationsschaltung (34) zum Ausführen einer Addition oder einer Subtraktion zwischen dem Videoausgangssignal der Verzögerungsschaltung und dem Videoeingangssignal, welches dem Eingangsanschluß zugeführt wird; die Rückkopplungsleitung, der ein Ausgangssignal der Operationsschaltung zugeführt wird, wobei die Rückkopplungsleitung die Hochpaß- oder Bandpaßfilterschaltung (35) zum Herausfiltern einer vorbestimmten Frequenzkomponente aus dem Ausgangssignal der Operationsschaltung, ferner einen ersten Begrenzer (72), dem im wesentlichen ein Ausgangssignal der Hochpaß- oder Bandpaßfilterschaltung (35) zugeführt wird zur Amplitudenbegrenzung eines Amplitudenanteils, der größer als ein Begrenzungspegel des ersten Begrenzers ist, und den Koeffizientenmultiplikator (36) aufweist, der in Serie zu einer Eingangsseite oder einer Ausgangsseite des ersten Begrenzers zum Multiplizieren eines Koeffizienten geschaltet ist; und eine Additionsschaltung (32) zum Addieren eines Ausgangssignals der Rückkopplungsleitung und des Videoeingangssignals, welches dem Eingangsanschluß zugeführt wird, und zum Zuführen eines Ausgangssignals zu der Verzögerungsschaltung; und daß eine Ausgleichsschaltung (75) eine Filterschaltung (76) aufweist, der ein Ausgangssignal des Rückkopplungskammfilters zum Herausfiltern einer vorbestimmten Frequenzkomponente zugeführt wird; einen zweiten Begrenzer (77), dem im wesentlichen ein Ausgangssignal der Filterschaltung zur Amplitudenbegrenzung des Ausgangssignals dieser Filterschaltung zugeführt wird; einen weiteren Koeffizientenmultiplikator (78), der in Serie mit einer Eingangsseite oder einer Ausgangsseite der Filterschaltung geschaltet ist oder in Serie zu einer Ausgangsseite des zweiten Begrenzers (77) geschaltet ist zum Multiplizieren eines Koeffizienten; eine Substrahierschaltung (79) zum Ausführen einer Subtraktion zwischen dem Ausgangssignal des Rückkopplungskammfilters und einem Ausgangssignal einer speziellen Schaltung, die aus der Filterschaltung, dem zweiten Begrenzer und dem weiteren Koeffizientenmultiplikator (78), die in Serie geschaltet sind, gebildet ist; und einen Ausgangsanschluß (80), an dem ein Videoausgangssignal dieser Subtrahierschaltung vorliegt.

4. Rauschverminderungsschaltung für ein Videosignal, dadurch gekennzeichnet, daß die Rauschverminderungsschaltung ein Rückkopplungskammfilter (71) aufweist, in dem ein Videoausgangssignal einer Verzögerungsschaltung (33), die ein Videosignal mit einer oder zwei Horizontalabtastperioden verzögert, auf eine Eingangsseite der Verzögerungsschaltung durch eine Rückkopplungsleitung rückgekoppelt ist, wobdi die Rückkopplungsleitung eine Hochpaß- oder Bandpaßfilterschaltung (35) und einen ersten Koeffizientenmultiplikator (36) aufweist, die in Serie geschaltet sind; und daß die Rauschverminderungsschaltung eine erste Subtrahierschaltung (41) zum Subtrahieren eines Videoausgangssignals des Rückkopplungskammfilters von einem Eingangssignal des Rückkopplungskammfilters aufweist; ferner einen ersten Begrenzer (73) zur Amplitudenbegrenzung eines Ausgangssignals der ersten Subtrahierschaltung; eine zweite Subtrahierschaltung (74) zum Subtrahieren eines Ausgangssignals des ersten Begrenzers von dem Eingangssignal des Rückkopplungskammfilters; und eine Ausgleichsschaltung (75), der ein Ausgangssignal der zweiten Subtrahierschaltung zugeführt wird, und die eine Frequenzcharakteristik aufweist, die komplementär zu der Einhüllungskennlinie einer Frequenzcharakteristik des Rückkopplungskammfilters ist.

5. Rauschverminderungsschaltung nach Anspruch 4, dadurch gekennzeichnet, daß das Rückkopplungskammfilter (71) eine Eingangsanschluß (31) aufweist, dem ein Videoeingangssignal, dessen Rauschanteil zu vermindern ist, zugeführt wird; die Verzögerungsschaltung (33); eine Operationsschaltung (34) zum Ausführen einer Addition oder einer Subtraktion zwischen dem Videoausgangssignal der Verzögerungsschaltung und dem Videoausgangssignal der Verzögerungsschaltung und dem Videoeingangssignal, welches dem Eingangsanschluß zugeführt wird; die Rükkopplungsleitung, der ein Ausgangssignal der Operationsschaltung zugeführt wird, wobei die Rückkopplungsleitung die Hochpaß- oder Bandpaßfilterschaltung (35) zum Herausfiltern einer vorbestimmten Frequenzkomponente des Ausgangssignals der Operationsschaltung, einen zweiten Begrenzer (72), dem im wesentlichen ein Ausgangssignal der Hochpaß- oder Bandpaßfilterschaltung (35) zugeführt wird zur Amplitudenbegrenzung eines Amplitudenanteils, der größer als ein Begrenzungspegel des zweiten Begrenzers (72) ist, und den ersten Koeffizientenmultiplikator (36) aufweist, der in Serie zu einer Eingangsseite oder einer Ausgangsseite des zweiten Begrenzers geschaltet ist zum Multiplizieren eines Koeffizienten; und eine Additionsschaltung (32) zum Addieren eines Ausgangssignals der Rückkopplungsleitung und des Videoeingangssignals, welches dem Eingangsanschluß zugeführt wird, und zum Zuführen eines Ausgangssignals zu der Verzögerungsschaltung; und daß die Ausgleichsschaltung (75) eine Filterschaltung (76) aufweist, der ein Ausgangssignal der zweiten Subtrahierschaltung (74) zum Herausfiltern einer vorbestimmten Frequenzkomponente zugeführt wird; einen dritten Begrenzer (77), dem im wesentlichen ein Ausgangssignal der Filterschaltung (76) zur Amplitudenbegrenzung des Ausgangssignals der Filterschaltung zugeführt wird; einen zweiten Koeffizientenmultiplikator (78), der in Serie zu einer Eingangsseite oder einer Ausgangsseite der Filterschaltung oder in Serie zu einer Ausgangsseite des dritten Begrenzers geschaltet ist, zum Multiplizieren eines Koeffizienten; eine dritte Subtrahierschaltung (79) zum Ausführen einer Subtraktion zwischen dem Ausgangssignal der zweiten Subtrahierschaltung (74) und einem Ausgangssignal einer speziellen Schaltung, die aus der Filterschaltung, dem dritten Begrenzer und dem zweiten Koeffizientenmultiplikator, die in Serie geschaltet sind, gebildet ist; und einen Ausgangschluß (80), an dem ein Videoausgangssignal der dritten Subtrahierschaltung vorliegt.

6. Rauschverminderungsschaltung nach Anspruch 1, dadurch gekennzeichnet, daß die Rauschverminderungsschaltung eine Subtrahierschaltung (41) zum Ausführen einer Subtraktion zwischen einem Videoeingangssignal und einem Videoausgangssignal einer vorbestimmten Schaltung aufweist, in der das Rückkopplungskammfilter und die Ausgleichsschaltung in Serie geschaltet sind; ferner eine Spitzenbegrenzungsschaltung (42), der ein Ausgangssignal der Subtrahierschaltung (41) zugeführt wird und die nur ein Signal durchläßt, welches einen Pegel aufweist, der größer als ein Begrenzungspegel der Spitzenbegrenzungsschaltung ist; eine ersten Addierschaltung (43) zum Addieren eines Ausgangssignals der Spitzenbegrenzungsschaltung und des Ausgangssignals der vorbestimmten Schaltung; und einen Ausgangsanschluß (39), an dem ein Ausgangsignal der ersten Addierschaltung als ein Videoausgangssignal erzeugt wird.

7. Rauschverminderungsschaltung nach Anspruch 6, dadurch gekennzeichnet, daß das Rückkopplungskammfilter (37) einen Eingangsanschluß (31) aufweist, dem ein Eingangssignal zugeführt wird, das ein Videoeingangssignal ist, dessen Rauschanteil zu reduzieren ist, oder ein Videoausgangssignal der Ausgleichsschaltung (30); ferner die Verzögerungsschaltung (33), eine Operationsschaltung (34) zum Ausführen einer Addition oder einer Subtraktion zwischen dem Videoausgangssignal der Verzögerungsschaltung und dem Eingangssignal, welches dem Eingangsanschluß zugeführ wird; und die Rückkopplungsleitung, der ein Ausgangssignal der Operationsschaltung zum Herausfiltern einer Hochfrequenzkomponente des Ausgangssignals der Operationsschaltung und zum Multiplizieren der Hochfrequenzkomponente mit einem Koeffizienten zugeführt wird; und eine zweite Addierschaltung (32) zum Addieren eines Ausgangssignals der Rückkopplungsleitung und des Eingangssignals, welches dem Eingangsanschluß zugeführt wird, und zum Zuführen eines Ausgangssignals zu der Verzögerungsschaltung, wobei ein Videosignal mit einer Kammfiltercharakteristik von einer Eingangsseite oder als ein Ausgangssignal der Operationsschaltung erhalten wird.

8. Rauschverminderungsschaltung nach Anspruch 1, dadurch gekennzeichnet, daß die Rauschverminderungsschaltung eine Subtrahierschaltung (41) zum Ausführen einer Subtraktion zwischen einem Videoeingangssignal und einem Videoausgangssignal einer vorbestimmten Schaltung, in der das Rückkopplungskammerfilter und die Ausgleichsschaltung in Serie geschaltet sind, aufweist; ferner eine Filterschaltung (51, 52) zum Aufteilen eines Frequenzbandes eines Ausgangssignals der Subtrahierschaltung (41) in zwei Frequenzbänder, so daß eine Hochfrequenzkomponente und eine tiefe Frequenzkomponente erhalten werden; eine Spitzenbegrenzungsschaltung (53), der die von der Filterschaltung erhaltene Hochfrequenzkomponente zugeführt wird und die nur ein Signal mit einem Pegel durchläßt, der größer als ein Begrenzungspegel der Spitzenbegrenzungsschaltung ist; eine Addiervorrichtung (54, 55) zum Addieren der tiefen Frequenzkomponente, die von der Filterschaltung geliefert wird, eines Ausgangssignals der Spitzenbegrenzungsschaltung und des Ausgangssignals von der vorbestimmten Schaltung; und eine Ausgangsanschluß (56), an dem ein Ausgangssignal der Addiervorrichtung als ein Videoausgangssignal erzeugt wird.

9. Rauschverminderungsschaltung nach Anspruch 8, dadurch gekennzeichnet, daß das Rückkopplungskammfilter (37) einen Eingangsanschluß (31) aufweist, dem ein Eingangssignal zugeführt wird, welches ein Videoeingangssignal ist, dessen Rauschanteil zu reduzieren ist, oder ein Videoausgangssignal der Ausgleichsschaltung; die Verzögerungsschaltung (33); eine Operationsschaltung (34) zum Ausführen einer Addition oder einer Subtraktion zwischen dem Videoausgangssignal der Verzögerungsschaltung und dem Eingangssignal, das dem Eingangsanschluß zugeführt wird; die Rückkopplungsleitung, der ein Ausgangssignal der Operationsschaltung zum Herausfiltern einer Hochfrequenzkomponente des Ausgangssignals der Operationsschaltung und zum Multiplizieren der Hochfrequenzkomponente mit einem Koeffizienten zugeführt wird; und eine Additionsschaltung (32) zum Addieren eines Ausgangssignals der Rückkopplungsleitung und des dem Eingangsanschluß zugeführten Eingangssignals, und zum Zuführen eines Ausgangssignals zu der Verzögerungsschaltung, wobei ein Videosignal mit einer Kammfiltercharakteristik von einer Eingangsseite oder als ein Ausgangssignal der Operationsschaltung erhalten wird.

**Revendications**

1. Circuit réducteur de bruit pour un signal vidéo, comprenant un filtre en peigne du type à réaction (37, 71) dans lequel un signal vidéo de sortie d'un circuit à retard (33) qui retarde un signal vidéo d'une ou deux périodes de balayage horizontal, est ramené à l'entrée du circuit à retard (33) par un circuit de réaction, et un circuit égaliseur (38, 75) monté en série avec le filtre en peigne du type à réaction (37, 71), caractérisé en ce que le chemin de réaction comprend un filtre passe-haut ou passe-bande (35) et un multiplieur à coefficient (36) montés en série, le circuit égaliseur (38, 75) ayant une courbe de réponse en fréquence complémentaire d'une courbe enveloppe d'une courbe de réponse en fréquence dudit filtre en peigne.

2. Circuit réducteur de bruit selon la revendication 1, caractérisé en ce que le filtre en peigne du type à réaction (37) comprend une borne d'entrée (31) à laquelle est appliqué un signal d'entrée, ce signal d'entrée étant un signal vidéo d'entrée qui doit être débarrassé du bruit qu'il contient ou un signal vidéo de sortie du circuit égaliseur (38); le circuit à retard (33); un circuit d'opération (34) pour exécuter une addition ou une soustraction entre le signal vidéo de sortie du circuit à retard (33) et le signal vidéo d'entrée appliqué à la borne d'entrée (31); ledit chemin de réaction, auquel est appliqué le signal de sortie du circuit d'opération (34) pour filtrer une composante à fréquences élevées du signal de sortie de ce circuit d'opération (34) et pour multiplier par un coefficient cette composante à fréquences élevées; et un circuit additionneur (32) pour additionner le signal de sortie dudit chemin de réaction et le signal d'entrée appliqué à la borne d'entrée (31), et pour fournir un signal de sortie au circuit à retard (33), un signal vidéo ayant une caractéristique correspondant à un filtre en peigne étant obtenu à l'entrée ou à la sortie du circuit d'opération (34).

3. Circuit réducteur de bruit selon la revendication 1, caractérisé en ce que le filtre en peigne du type à réaction (71) comprend une borne d'entrée (31) à laquelle est appliqué un signal vidéo d'entrée qui doit être débarrassé du bruit qu'il contient; le circuit à retard (33); un circuit d'opération (34) pour exécuter une addition ou une soustraction entre le signal vidéo de sortie du circuit à retard (33) et le signal vidéo d'entrée appliqué à la borne d'entrée (31); ledit chemin de réaction auquel est appliqué le signal de sortie du circuit d'opération (34), ce chemin de réaction comprenant le filtre passe-haut ou passe-bande (35) pour filtrer une composante à fréquences élevées déterminée du signal de sortie du circuit d'opération (34), un premier limiteur (72) auquel est appliqué essentiellement le signal de sortie du filtre passe-haut ou passe-bande (35) pour éliminer que partie d'amplitude qui est plus grande

17

qu'un niveau de limitation du premier limiteur (72), et le multiplieur à coefficient (36) monté en série avec l'entrée ou la sortie de ce premier limiteur (72) pour appliquer un coefficient; et un circuit additionneur (32) pour additionner le signal de sortie dudit chemin de réaction et le signal vidéo d'entrée appliqué à la borne d'entrée (31) et pour fournir un signal de sortie au circuit à retard (33); et en ce que le circuit égaliseur (75) comprend un filtre (76) auquel est appliqué le signal de sortie du filtre en peigne du type à réaction (71) pour filtrer une composante de fréquence déterminée; un deuxième limiteur (77) auquel est appliqué essentiellement le signal de sortie du filtre (76) pour limiter l'amplitude du signal de sortie de ce filtre; un autre multiplier à coefficient (78) monté en série avec l'entrée ou la sortie du filtre (76) ou avec la sortie du deuxième limiteur (77) pour appliquer un coefficient; un circuit soustracteur (79) pour exécuter une soustraction entre le signal de sortie du filtre en peigne du type à réaction (71) et un signal de sortie d'un circuit spécifique, ce circuit spécifique étant formé par le filtre (76), le deuxième limiteur (77) et l'autre multiplier à coefficient (78), qui sont montés en série; et une borne de sortie (80) à laquelle le signal de sortie du circuit soustracteur (79) est obtenu.

4. Circuit réducteur de bruit pour un signal vidéo, comprenant un filtre en peigne du type à réaction (71) dans lequel un signal vidéo de sortie d'un circuit à retard (33), qui retarde un signal vidéo d'une ou deux périodes de balayage horizontal, est ramené à l'entrée du circuit à retard (33) par un chemin de réaction, caractérisé en ce que ce chemin de réaction comprend un filtre passe-haut ou passe-bande (35) et un premier multiplier à coefficient (36) montés en série, et que ledit circuit réducteur de bruit comprend un premier circuit soustracteur (41) pour soustraire le signal vidéo de sortie du filtre en peigne du type à réaction du signal d'entrée de ce filtre en peigne; un premier limiteur (73) pour limiter l'amplitude du signal de sortie du premier circuit soustracteur (41); un deuxième circuit soustracteur (74) pour soustraire le signal de sortie du premier limiteur (73) du signal d'entrée du filtre en peigne du type à réaction (71); et un circuit égaliseur (75) auquel est appliqué le signal de sortie du deuxième circuit soustracteur (74), ce circuit égaliseur ayant une courbe de réponse en fréquence complémentaire de la courbe enveloppe de la courbe de réponse en fréquence du filtre en peigne du type à réaction (71).

5. Circuit réducteur de bruit selon la revendication 4, caractérisé en ce que le filtre en peigne du type à réaction (71) comprend une borne d'entrée (31) à laquelle est appliqué un signal vidéo d'entrée qui doit être débarrassé du bruit qu'il contient; le circuit à retard (33); un circuit d'opération (34) pour exécuter une addition ou une soustraction entre le signal vidéo de sortie du circuit à retard (33) et le signal vidéo d'entrée appliqué à la borne d'entrée (31); ledit chemin de réaction auquel est appliqué le signal de sortie du circuit d'opération (34), ce chemin de réaction comprenant le filtre passe-haute ou passe-bande (35) pour filtrer une composante de fréquences déterminées du signal de sortie du circuit d'opération (34), un deuxième limiteur (72) auquel est appliqué essentiellement le signal de sortie du filtre passehaut ou passe-bande (35) pour éliminer une partie d'amplitude qui est supérieure à un niveau de limitation de ce deuxième limiteur (72), et le premier multiplieur à coefficient (36) monté en série avec l'entrée ou la sortie du deuxième limiteur (72) pour appliquer un coefficient; et un circuit additionneur (32) pour additionner le signal de sortie dudit circuit de réaction et le signal vidéo d'entrée appliqué à la borne d'entrée (31) et pour fournir un signal de sortie au circuit à retard (33); et en ce que le circuit égaliseur (75) comprend un filtre (76) auquel est appliqué le signal de sortie du deuxième circuit soustracteur (74) pour filtrer une composante de fréquence déterminée; un troisième limiteur (77) auquel est essentiellement appliqué le signal de sortie du filtre (76) pour limiter en amplitude le signal de sortie de ce filtre; un deuxième multiplier à coefficient (78) monté en série avec l'entrée ou la sortie du filtre (76) ou avec la sortie du troisième limiteur (77) pour appliquer un coefficient; un troisième circuit soustracteur (79) pour exécuter une soustraction entre le signal de sortie du deuxième circuit soustracteur (74) et le signal de sortie d'un circuit spécifique, ce circuit spécifique étant formé par le filtre (76), le troisième limiteur (77) et le deuxième multiplieur à coefficient (78) montés en série; et une borne de sortie (80) à laquelle le signal vidéo de sortie du troisième circuit soustracteur (79) est obtenu.

6. Circuit réducter de bruit selon la revendication 1, caractérisé en ce qu'il comprend un circuit soustracteur (41) pour exécuter une soustraction entre un signal vidéo d'entrée et un signal vidéo de sortie d'un circuit déterminé dans lequel le filtre en peigne du type à réaction (71) et le circuit égaliseur (75) sont montés en série; un circuit écrêteur (42) auquel est appliqué le signal de sortie du circuit soustracteur (41) pour ne laisser passer qu'un signal ayant un niveau supérieur à un niveau d'écrêtage du circuit écrêteur (42); un premier circuit additionneur (43) pour additionner le signal de sortie du circuit écrêteur (42) et le signal de sortie dudit circuit déterminé; et une borne de sortie (44) à laquelle le signal de sortie du premier circuit additionneur (43) est obtenu comme signal vidéo de sortie.

7. Circuit réducteur de bruit selon la revendication 6, caractérisé en ce que le filtre en peigne du type à réaction (37) comprend une borne d'entrée (31) à laquelle est appliqué un signal d'entrée, ce signal d'entrée étant un signal vidéo d'entrée qui doit être débarrassé du bruit qu'il contient ou un signal vidéo de sortie du circuit égaliseur (38); le circuit à retard (33); un circuit d'opération (34) pour exécuter une addition ou une soustraction entre le signal vidéo de sortie du circuit à retard (33) et le signal d'entrée appliqué à la borne d'entrée (31); et un chemin de réaction auquel est appliqué le signal de sortie du circuit d'opération (34) pour filtrer une composante à fréquences élevées du signal de sortie du circuit d'opération (34) et pour appliquer un coefficient à cette composante à fréquences élevées; et un deuxième circuit additionneur (32) pour additionner le signal de sortie dudit chemin de réaction et le signal d'entrée appliqué à la borne d'entrée (31) et pour fournir un signal de sortie au circuit à retard (33), un signal vidéo ayant une caractéristique correspondant à un filtre en peigne étant obtenu à l'entrée ou à la sortie du circuit d'opération (34).

8. Circuit réducteur de bruit selon la revendication 1, caractérisé en ce qu'il comprend un circuit soustracteur (41) pour exécuter une soustraction entre un signal vidéo d'entrée et le signal vidéo de sortie d'un circuit déterminé dans lequel le filtre en peigne du type à réaction (37) et le circuit égaliseur (38) sont montés en série; un filtre (51, 52) pour diviser une bande de fréquences du signal de sortie du circuit soustracteur (41) en deux bandes de fréquences de façon à obtenir une composante à fréquences élevées et une composante à fréquences basses; un circuit écrêteur (53) auquel est appliquée la composante à fréquences élevées obtenue à la sortie du filtre (51, 52) pour ne laisser passer qu'un signal ayant un niveau supérieur à un niveau d'écrêtage du circuit écrêteur 53; des moyens d'addition (54, 55) pour additionner la composante à fréquences basses obtenue à la sortie du filtre (51, 52), le signal de sortie du circuit écrêteur (53) et le signal de sortie dudut circuit déterminé; et une borne de sortie (56) à laquelle le signal de sortie des moyens d'addition (54, 55) est obtenu sous la forme d'un signal vidéo de sortie.

9. Circuit réducteur de bruit selon la revendication 8, caractérisé en ce que le filtre en peigne du type à réaction (37) comprend une borne d'entrée (31) à laquelle est appliqué un signal d'entrée, ce signal d'entrée étant le signal vidéo du circuit égaliseur (38); le circuit à retard (33); un circuit d'opération (34) pour exécuter une addition ou une soustraction entre le signal vidéo de sortie du circuit à retard (33) et le signal d'entrée appliqué à la borne d'entrée (31); ledit chemin de réaction auquel est appliqué le signal de sortie du circuit d'opération (34) pour filtrer une composante à fréquences élevées du signal de sortie de ce circuit d'opération (34) et pour appliquer un coefficient à cette composante à fréquence élevées; et un circuit additionneur (32) pour additionner le signal de sortie dudit chemin de réaction et le signal d'entrée appliqué à la borne d'entrée (31) et pour fournir un signal de sortie au circuit à retard (33), un signal vidéo ayant une caractéristique de filtre en peigne étant obtenu à l'entrée ou à la sortie du circuit d'opération (34).

# FIG. 1

PRIOR
ART

<u>12</u>

13

14 ADD

15 1H DELAY

16 ADD

18 SUBTRACT

20 LPF

17 COEFF MULTI

19 EQUALIZ

21 ADD

22

# FIG. 2

PRIOR
ART

LEVEL

fc ⟶ FREQUENCY

FIG. 3

FIG. 4

(A)

(B)

(C)

## FIG. 5

## FIG. 6

## FIG. 7

## FIG. 8

FIG. 9

EP 0 147 073 B1

EP 0 147 073 B1

## FIG.10

_71_ _70_

COMB FILT

31 — 32 ADD — 33 1H DELAY — 34 ADD — 41 SUB-TRACT — 73 LIMIT — 74 SUB-TRACT

36 COEFF MULTI — 72 LIMIT — 35 HPF

_75_

EQUALIZ

76 HPF — 77 LIMIT — 78 COEFF MULTI — 79 SUB-TRACT — 80

## FIG.11

OUTPUT LEVEL

L1

0  INPUT LEVEL

L2

FIG.12

FIG.13

(A)

(B)

FIG.14

(A)

(B)

FIG.15

(A)

(B)

FIG.16

# FIG.17

COMB FILT    37a

31    32 ADD    33 1H DELAY    34 ADD    38a    39

COEFF MULTI    36

C1    HPF    R1    -35

R2    R3    C2

EQUALIZ

# FIG.18